(19)

Europäisches
Patentamt
European
Patent Office
Office européen
des brevets

(11) **EP 2 677 434 A1**

(12) **EUROPEAN PATENT APPLICATION**
published in accordance with Art. 153(4) EPC

(43) Date of publication:
**25.12.2013 Bulletin 2013/52**

(21) Application number: **11858987.8**

(22) Date of filing: **16.02.2011**

(51) Int Cl.:
*G06F 13/00* *(2006.01)*     *G06F 1/14* *(2006.01)*

(86) International application number:
**PCT/JP2011/053266**

(87) International publication number:
**WO 2012/111112 (23.08.2012 Gazette 2012/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Fujitsu Limited
Kawasaki-shi, Kanagawa 211-8588 (JP)**

(72) Inventor: **UCHIDA, Yasuhiko
Kawasaki-shi, Kanagawa 211-8588 (JP)**

(74) Representative: **HOFFMANN EITLE
Patent- und Rechtsanwälte
Arabellastrasse 4
81925 München (DE)**

(54) **INFORMATION PROCESSING DEVICE, TIME SETTING METHOD, AND TIME SETTING
PROGRAM**

(57)     To enable time adjustment of an information processing apparatus using more accurate time information.

Determining means (1b) determines a device capable of obtaining the most accurate time information among devices capable of obtaining time information under current operation status. Time adjusting means (1c) obtains time information (5) from the determined device, and adjusts the time of the timing means (1a) to the time indicated by the time information (5).

FIG. 1

**Description**

Technical Field

The embodiments discussed herein relate to an information processing apparatus, a time setting method, and a time setting program which set a time to timing means.

Background Art

There is a case where time information is used with regard to execution of a process in a computer. Accordingly, the computer has therein timing means which measures time. The computer then performs time adjustment of the time of the internal timing means at a predetermined timing. The time adjustment adjusts the time of the timing means implemented on software operating on the computer to the time of a clock accessible by the computer. For example, a Network Time Protocol (NTP) server connected via a network is used to perform NTP time adjustment.

In addition, a variety of techniques have been conceived to improve the accuracy of time. For example, there is a technique of detecting, based on time information appended to data exchanged between a local terminal and a server, the relative time difference between the server and the local terminal, and performing synchronous adjustment of the time of the local terminal in a manner compensating the difference.

Citation List

Patent Literature

PTL 1: Japanese Laid-open Patent Publication No. 2008-262292

Summary of Invention

Technical Problem

However, a complicated computer system makes it difficult to determine which device is indicating more accurate time among devices providing time information. In addition, the manner of providing time information varies depending on the operation status. Accordingly, it has been difficult, when performing time adjustment, to appropriately determine from which device the time information supposed to be the reference for time adjustment is obtained.

In one aspect, the invention has an object to provide an information processing apparatus, a time setting method, and a time setting program capable of performing time adjustment using more accurate time information.

Solution to Problem

According to a proposal, there is provided an information processing apparatus managing a device under management which performs data processing in response to a request. The information processing apparatus has timing means, determining means, and time adjusting means. The determining means recognizes the device under management as one of devices providing time information, and determines a device that provides the most accurate time information among devices providing time information obtainable under current operation status. The time adjusting means obtains time information from the determined device, and adjusts the time of the timing means to the time indicated by the obtained time information.

According to a proposal, there is provided a time setting method including the following procedure performed by an information processing apparatus managing a device under management which performs data processing in response to a request.

The information processing apparatus first recognizes the device under management as one of devices providing time information, and determines a device that provides the most accurate time information among devices providing time information obtainable under current operation status. The information processing apparatus then obtains time information from the determined device, and adjusts a time of timing means inside the information processing apparatus to a time indicated by the obtained time information.

According to a proposal, there is provided a time setting program which causes an information processing apparatus managing a device under management which performs data processing in response to a request to perform the following procedure.

Based on the time setting program, the information processing apparatus first recognizes the device under management as one of devices providing time information, and determines a device that provides the most accurate time information among devices providing time information obtainable under current operation status. The information processing apparatus then obtains time information from the determined device, and adjusts a time of timing means inside the information processing apparatus to a time indicated by the obtained time information.

Advantageous Effects of Invention

Time adjustment using more accurate time information becomes possible.

The above-mentioned and other objects, characteristic, and advantages of the invention will become apparent by the following descriptions related to accompanying drawings illustrating preferred embodiments as examples of the invention.

Brief Description of Drawings

[FIG. 1] FIG. 1 illustrates an exemplary functional configuration of a device according to a first embodiment.

[FIG. 2] FIG. 2 illustrates an exemplary system configuration of a second embodiment.

[FIG. 3] FIG. 3 illustrates a hardware configuration of a multi-domain system according to the second embodiment.

[FIG. 4] FIG. 4 is a block diagram illustrating a function of the multi-domain system according to the second embodiment.

[FIG. 5] FIG. 5 illustrates an exemplary data structure of a difference storing unit.

[FIG. 6] FIG. 6 is the first half of a flow chart illustrating the procedure of a time synchronization process in the subsystem.

[FIG. 7] FIG. 7 is the latter half of the flow chart illustrating the procedure of a time synchronization process in the subsystem.

[FIG. 8] FIG. 8 is a sequence chart illustrating the procedure of a difference time updating process.

[FIG. 9] FIG. 9 illustrates a general concept of difference time.

[FIG. 10] FIG. 10 illustrates an exemplary reference clock appropriate for each device depending on the operating configuration of the system.

[FIG. 11] FIG. 11 illustrates a first exemplary operation status of the multi-domain system.

[FIG. 12] FIG. 12 illustrates, in chronological order, time adjustment in the first exemplary operation status of the multi-domain system.

[FIG. 13] FIG. 13 illustrates a second exemplary operation status of the multi-domain system.

[FIG. 14] FIG. 14 illustrates, in chronological order, time adjustment in the second exemplary operation status of the multi-domain system.

[FIG. 15] FIG. 15 illustrates a third exemplary operation status of the multi-domain system.

[FIG. 16] FIG. 16 illustrates, in chronological order, time adjustment in the third exemplary operation status of the multi-domain system.

[FIG. 17] FIG. 17 illustrates an exemplary hardware configuration of a multi-domain system according to a third embodiment.

Description of Embodiments

In the following, embodiments will be described, referring to the drawings. Respective embodiments may be implemented by combining a plurality of embodiments inside a range where no conflict occurs.

[First Embodiment]

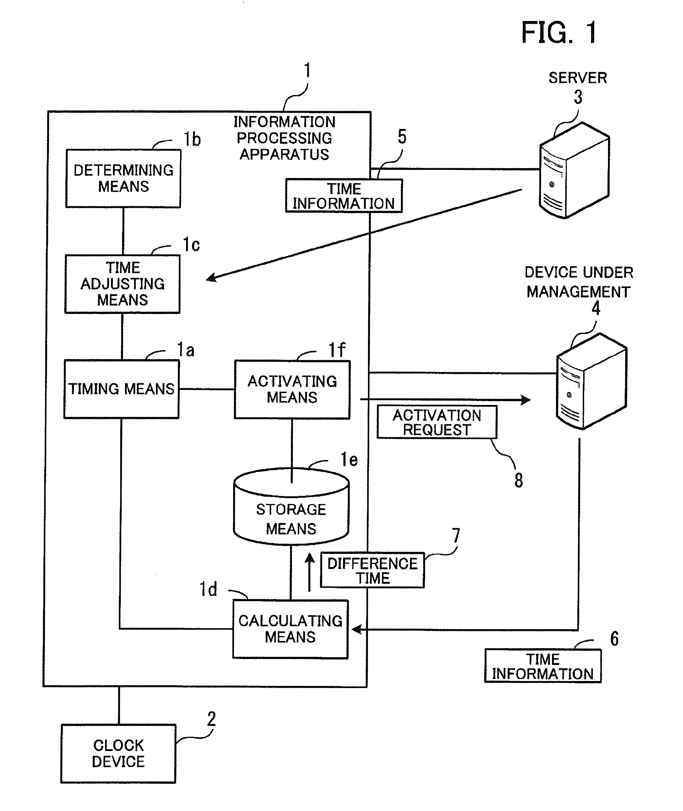

FIG. 1 illustrates an exemplary functional configuration of a device according to a first embodiment. An information processing apparatus 1 manages a device under management 4 which performs data processing in response to a request, for example. The information processing apparatus 1 has timing means 1a, determining means 1b, time adjusting means 1c, calculating means 1d, storage means 1e, and activating means 1f.

The timing means 1a measures the time. The timing means 1a is implemented by executing software such as the OS (Operating System) by the information processing apparatus 1, for example.

The determining means 1b recognizes the device under management 4 as one of devices providing time information. The determining means 1b then determines a device capable of obtaining the most accurate time information 5, among the devices capable of obtaining time information under current operation status. For example, the determining means 1b determines, upon activation of the information processing apparatus 1, a clock device 2 backed up by a battery as the device indicating the most accurate time. In addition, during operation of the information processing apparatus 1, the determining means 1b may determine a server 3 as the device indicating the most accurate time when time information is obtainable from the server 3 providing time information in response to requests from other devices.

In addition, there may be also a case, during operation of the information processing apparatus 1, where time information is not obtainable from the server 3 providing time information in response to requests from other devices. In this case, the determining means 1b may determine, when time information is obtainable from a device whose time has been adjusted with the server 3, the device as the device indicating the most accurate time. For example, when the device under management 4 regularly obtains time information from the server 3 to perform time adjustment of internal timing means, the determining means 1b is capable of determining the device under management 4 as the device indicating the most accurate time. The device under management 4 performs data processing in response to a request from a terminal being used by a user, for example.

Furthermore, there may be also a case, during operation of the information processing apparatus 1, where time information is obtainable neither from the server 3 providing time information in response to requests from other devices nor from a device the time of which has been adjusted with the server 3. In this case, the determining means 1b is capable of determining the clock device 2 backed up by a battery as the device indicating the most accurate time, for example.

The time adjusting means 1c obtains the time information 5 from the determined device and adjusts the time of the timing means 1a to the time indicated by the time information 5. In addition, when the time of the timing means 1a has been set to the time indicated by time information obtained from a device other than the clock device 2 backed up by a battery during operation of the information processing apparatus 1, the time adjusting means 1c adjusts the time of the clock device 2 to the time indicated by the timing means 1a.

The calculating means 1d obtains the time information 5 indicating the time from the timing means inside the device under management 4, and calculates a difference time 7 between the time indicated in the obtained time information 5 and the time indicated by the timing means 1a. For example, the calculating means 1d regularly obtains the time indicated by the timing means inside the device under management 4. For example, the calculating means 1d stores the calculated time in the storage means 1e, in association with the device under management 4.

The storage means 1e stores the difference time 7 calculated by the calculating means 1d.

When terminating and subsequently activating the operation of the device under management 4, the activating means 1f sets a time obtained by adding the difference time of the device under management 4 to the time indicated by the timing means 1a as the initial value of the time of the timing means inside the device under management 4, and activates the device under management 4. For example, the activating means 1f obtains the difference time of the device under management 4 from the storage means 1e.

According to the information processing apparatus 1 as described above, the determining means 1b determines a device capable of obtaining the most accurate time information among devices capable of obtaining time information under current operation status. For example, let us assume that the time of the time information provided by the server 3 is the most accurate and the time of the clock device 2 is the second most accurate. In this occasion, the determining means 1b determines that the server 3 is the device capable of obtaining the most accurate time information, when the information processing apparatus 1 is capable of obtaining the time information 5 from the server 3.

Note that, even when the information processing apparatus 1 is not capable of obtaining the time information 5 from the server 3, there is a case where the device under management 4, for example, obtains the time information 5 from the server 3 and adjusts the time of the internal timing means. In this case, the determining means 1b determines that the time of the timing means inside the device under management 4, for example, is more accurate than the time of the clock device 2, and determines the device under management 4 as the device capable of obtaining the most accurate time information.

In addition, there may be also a case where neither the information processing apparatus 1 nor the device under management 4 is capable of obtaining the time information 5 from the server 3. In this case, the determining means 1b determines, for example, the clock device 2 as the device capable of obtaining the most accurate time information.

When the device capable of obtaining the most accurate time information is determined by the determining means 1b, the time adjusting means 1c obtains the time information 5 from the determined device. The time adjusting means 1c then adjusts the time of the timing means 1a to the time indicated by the obtained time information 5.

In addition, when there exists a device under management 4 being managed by the information processing apparatus 1, the calculating means 1d calculates the difference time 7 indicating the difference between the time indicated by the timing means inside the device under management 4 and the time indicated by the timing means 1a. Calculation of the difference time 7 is regularly performed, for example. The calculated difference time 7 is stored in the storage means 1e. When the device under management 4 is stopped and subsequently reactivated, an activation request 8 is transmitted to the device under management 4 from the activating means 1f. For example, the activating means 1f transmits the activation request 8 in response to an operation input from a user instructing activation of the device under management 4. The activation request 8 to be transmitted includes a time obtained by adding the difference time of the device under management 4 to the time indicated by the timing means 1a. The device under management 4 which has received the activation request 8 then sets the time indicated in the activation request 8 to the initial value of the internal timing means, and performs activation.

In the above manner, the difference time during operation of the device under management 4 may be held in the information processing apparatus 1, and a time obtained by adding the difference time to the time indicated by the timing means 1a may be used as the initial value of the time of the timing means inside the device under management 4 when reactivating the device under management 4. As a result, it is possible to prevent occurrence of a situation such that a time earlier than the time before stop is set as the initial value of the time of the internal timing means due to reactivation of the device under management 4. Setting the time of the internal timing means to a time earlier than the time before stop may prevent normal execution of a procedure using the time information. Therefore, the reliability of the device under management 4 may be improved by preventing time from going back due to reactivation.

In addition, the time of the timing means inside the device under management 4 may be prevented from advancing by the time difference from the time for which the device under management 4 has been stopped, by activating the device under management 4 with the time corrected by the difference time 7 as the initial value. When the time of the timing means inside the device under management 4 advances by the time difference from the time for which the device under management 4 has been actually stopped, it is not possible to perform proper analysis in analyzing log data inside the device under management 4. Accordingly, it is possible to suppress occurrence of conflict in log data being recorded by the device under management 4 and increase the reliability of analysis of the operation situation of the device under management 4, by advancing the internal clock of the device under management 4 by the time for which the device under management 4 has been stopped and activating the device under management 4.

[Second Embodiment]

A second embodiment uses an appropriate clock for operating a multi-domain system to perform time adjustment of each device in the multi-domain system. In the second embodiment, the information processing apparatus will be referred to as a computer.

The multi-domain system is a computer system having a subsystem and a plurality of domains. The subsystem is a computer managing a plurality of domains. For example, the subsystem is an example of the information processing apparatus 1 illustrated in FIG. 1. Each of the plurality of domains is a computer capable of operating individually. For example, each of the plurality of domains is an example of the device under management 4 illustrated in FIG. 1.

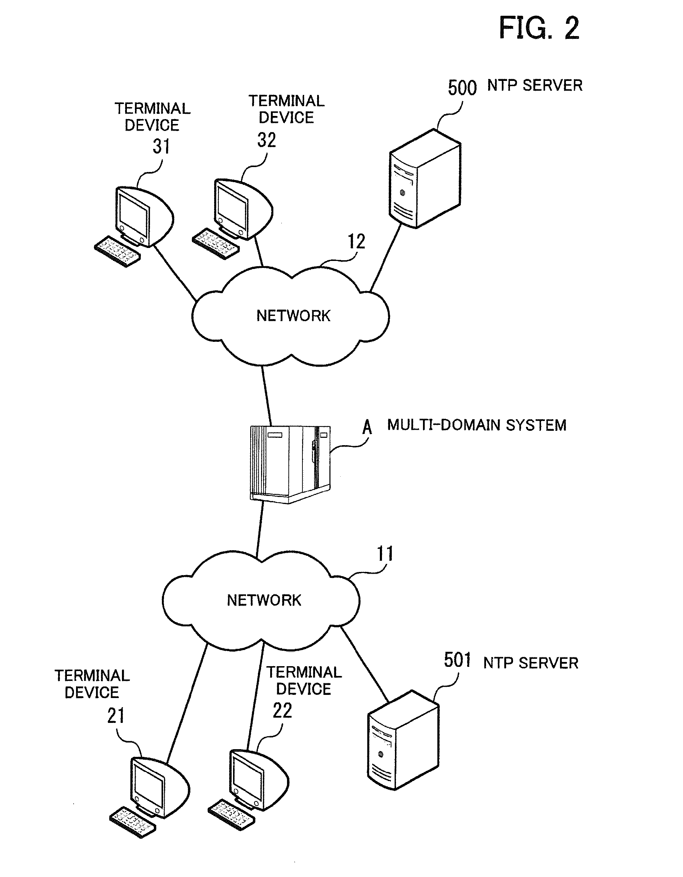

FIG. 2 illustrates an exemplary system configuration of the second embodiment. For example, a multi-domain system A is connected to terminal devices 21 and 22 and an NTP server 501 via a network 11. The network 11 is, for example, a Local Area Network (LAN). In addition, the multi-domain system A is connected to terminal devices 31 and 32 and an NTP server 500 via a network 12. For example, the network 12 is a wide area network such as the Internet.

The multi-domain system A incorporates a plurality of computers referred to as domains. Each domain performs various data processing in response to requests from the terminal devices 31 and 32. The multi-domain system A incorporates a computer referred to as a subsystem. The subsystem manages the entire multi-domain system A according to instructions from the terminal devices 21 and 22.

The NTP servers 500 and 501, each having an accurate clock, transmit time information to other devices using an NTP. For example, the NTP servers 500 and 501 are capable of obtaining time information directly or indirectly from an accurate time source such as a GPS (Global Positioning System) or an atomic clock to perform time adjustment of internal clocks. The multi-domain system A is capable of communicating with the NTP servers 500 and 501 to perform time adjustment of the internal clocks. Although the NTP server 501 is connected to the network 11 and the NTP server 500 is connected to the network 12 in FIG. 2, there also may be a case where the NTP servers 500 and 501 are not connected to any of the networks 11 and 12. In addition, the NTP server may be connected to only one of the networks 11 and 12. Furthermore, there may be a case where normal communication between the NTP servers 500 and 501 and the multi-domain system A is impossible. Here, the NTP server 500 is an example of the server 3 illustrated in FIG. 1.

In the second embodiment, the multi-domain system A, providing different services for respective domains, may hold different times for respective domains. The second embodiment therefore performs an appropriate time setting with an assumption that times for respective domains may be intentionally set differently.

In the second embodiment, time adjustment performed by a subsystem or a plurality of domains using an NTP takes a certain time. For example, when the time has gained 10 seconds, subsequent progress of time is delayed a little. In other words, an adjustment is performed to advance the clock by "$\tau$-10" seconds during a time $\tau$ seconds ($\tau$ is a positive real number). In this manner, correcting the time taking a certain time makes it possible to prevent occurrence of system failure due to sudden change of time.

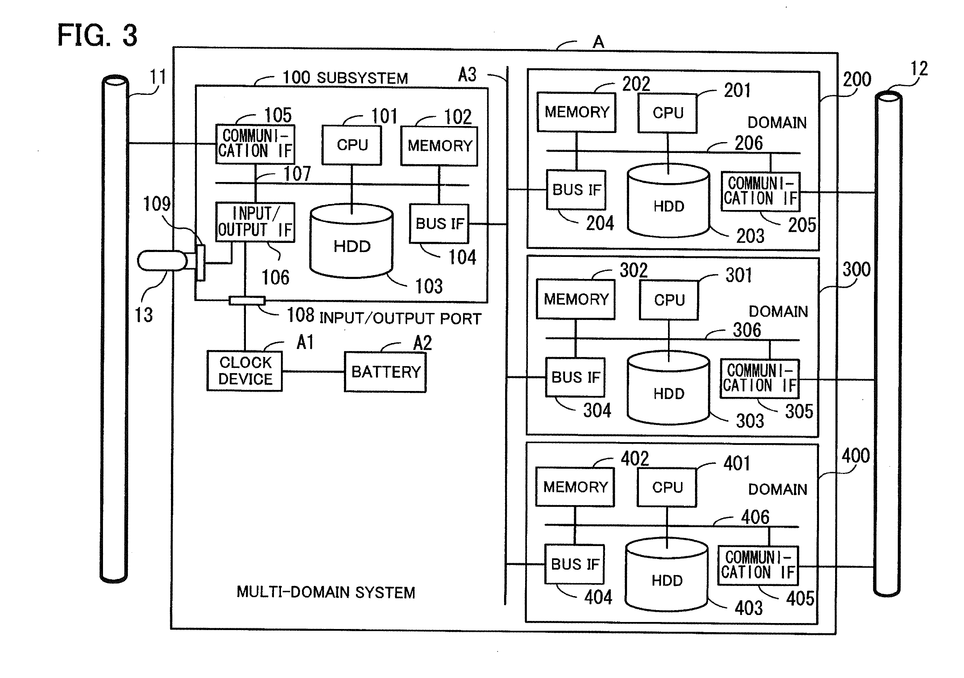

FIG. 3 illustrates a hardware configuration of the multi-domain system according to the second embodiment. The multi-domain system A has a subsystem 100 and a plurality of domains 200, 300 and 400. In addition, the multi-domain system A has a clock device A1. The clock device A1 is a clock which ticks accurate time with hardware which is backed up by a battery A2 and uses a crystal oscillator or the like. The clock device A1 is also referred to as a TOD (Time Of Day). The clock device A1 is connected to the subsystem 100.

The subsystem 100 and the domains 200, 300 and 400 are connected via an internal bus A3. The subsystem 100 is connected to the network 11. The domains 200, 300 and 400 are connected to the network 12.

The subsystem 100 is controlled as a whole by a CPU (Central Processing Unit) 101. The CPU 101 has a memory 102 and a plurality of peripheral devices connected thereto via a bus 107.

The memory 102 is used as a main storage unit of the subsystem 100. The memory 102 has at least a part of programs of the OS or application programs to be executed by the CPU 101 temporarily stored therein. In addition, the memory 102 has various data necessary for processing by the CPU 101 stored therein.

As peripheral devices connected to the bus 107, there are a hard disk drive (HDD) 103, a bus interface (IF) 104, a communication interface 105, an input/output interface 106.

The HDD 103 magnetically writes and reads data to and from a built-in disk. The HDD 103 is used as a secondary storage unit of the subsystem 100. The HDD 103 has programs of the OS, application programs, and various data stored therein. As the secondary storage unit, a semiconductor storage device such as a flash memory may also be used.

The bus interface 104 is connected to the internal bus A3, and communicates with the domains 200, 300 and 400 via the internal bus A3.

The communication interface 105 is connected to the network 11, and communicates with other devices via the network 11. For example, when an NTP server is connected to a network which is connected via the network 11, it is possible to communicate with the NTP server by the communication interface 105.

The input/output interface 106 is connected to devices outside the subsystem 100 via input/output ports 108 and 109. The input/output interface 106 receives data input from devices connected to the input/output ports 108 and 109, and also outputs data to devices connected to the input/output ports 108 and 109. In the example of FIG. 3, the clock device A1 is connected via the input/output port 108. In addition, a portable auxiliary storage device 13 is connected via the input/output port 109.

The auxiliary storage device 13 is a nonvolatile semiconductor memory device such as a flash memory, for example. The auxiliary storage device 13 is capable of storing a program having described therein procedures to be performed by the subsystem 100 or the domains 200, 300 and 400, for example. In this case, the CPU 101 may read a program stored in the auxiliary storage device 13 via the input/output interface 106 and install it in the HDD 103. In addition, the CPU 101 may read a program stored in the auxiliary storage device 13 via the input/output interface 106 and transfer it to the domains 200, 300 and 400 via the bus interface 104. In the domains 200, 300 and 400 which received a program, respective CPUs 201, 301 and 401 may install the program in HDDs 203, 303 and 403.

The subsystem 100 may have an optical drive. The optical drive reads data recorded on an optical disk using laser beam or the like. The optical disk is a portable storage medium having data stored to be readable by reflection of light. As optical disks, there are a DVD (Digital Versatile Disc), a DVD-RAM, a CD-ROM (Compact Disc Read Only Memory), a CD-R (Recordable)/RW (ReWritable), and the like.

The domain 200 is controlled as a whole by a CPU 201. The CPU 201 has a memory 202 and a plurality of peripheral devices connected thereto via a bus 206. As peripheral devices connected to the bus 206, there are an HDD 203, a bus interface 204, and a communication interface 205.

The domain 300 is controlled as a whole by a CPU 301. The CPU 301 has a memory 302 and a plurality of peripheral devices connected thereto via a bus 306. As peripheral devices connected to the bus 306, there are an HDD 303, a bus interface 304, and a communication interface 305.

The domain 400 is controlled as a whole by a CPU 401. The CPU 401 has a memory 402 and a plurality of peripheral devices connected thereto via a bus 406. As peripheral devices connected to the bus 406, there are an HDD 403, a bus interface 404, and a communication interface 405.

The memories 202, 302 and 402, the HDDs 203, 303 and 403, the bus interfaces 204, 304 and 404, and the communication interfaces 205, 305 and 405 have the same function as the components bearing the same names in the subsystem 100.

With the aforementioned hardware configuration, processing functions of the embodiment may be realized.

In such a multi-domain system A, each of the subsystem 100 and the domains 200, 300 and 400 manages time individually. In other words, each of the subsystem 100 and the domains 200, 300 and 400 has a software-based system clock. The subsystem 100 and the domains 200, 300 and 400 suppress time difference by adjusting the system clock with another clock as appropriate.

Time adjustment of the subsystem 100 and the domains 200, 300 and 400 uses, for example, the clock device A1 incorporated in the multi-domain system A or the NTP servers 500 and 501 connected via a network. In addition, upon activation of the respective domains 200, 300 and 400, the initial value of the activation time is notified from the subsystem 100.

In such a multi-domain system A, time precision of the subsystem 100 is lower than the clock device A1. In addition, the clock device A1 having a high time precision is backed up by the battery A2 and therefore keeps ticking even when the subsystem 100 has been stopped. Accordingly, the time of the clock device A1 is read by the subsystem 100 upon activation of the subsystem 100, and set as the initial value of the system clock of the subsystem 100. However, since the precision of the system clock of the subsystem 100 is lower than the clock device A1, operation of the subsystem 100 over a long time gradually increases the error of the system clock. Therefore, the second embodiment allows the error of the system clock of the subsystem 100 to be corrected as appropriate using an accurate clock.

In addition, when inspecting software operation using any of the domains, for example, there may be a case where the time of the system clock of the domain is intentionally set to a time which is different from the time of the system clock of the subsystem 100. Therefore, the subsystem 100 holds the difference time between the time of the system clock of each of the domains 200, 300 and 400, and the time of the system clock of the subsystem 100. Setting the difference time as the variation when the time of the system clock of the domain in this occasion is intentionally changed by user operation may lack accuracy of the difference time. In addition, precision of the system clock of each of the domains 200, 300 and 400 is lower than the clock device A1. Therefore, difference between the time of the system clock of the subsystem 100 and the time of the system clock of each of the domains 200, 300 and 400 varies while the multi-domain system A is being operated.

Therefore, in the second embodiment, accuracy of difference information is guaranteed by obtaining time information indicating the time of the system clocks of the domains 200, 300 and 400 in the subsystem 100 as appropriate, and updating the difference information. For example, even when each of the domains 200, 300 and 400 is reactivated, keeping the difference information accurate allows setting a time obtained by adding the stop time period to the time before stop as the initial value of the system clocks upon activation of the domains 200, 300 and 400. As a result, it is possible to reactivate the domains 200, 300 and 400 with the difference before stop being kept, thereby preventing inconsistency of time information due to reactivation.

It is possible to keep the system clock of each device accurate by time synchronizing each of the subsystem 100 and the domains 200, 300 and 400 with the NTP servers 500 and 501. However, in actual operation, there may be a case where connection to the NTP servers 500 and 501 is limited. For example, there may be a case where the domains 200, 300 and 400 are connected to a wide area network to which an unspecified number of users are connectable in view of providing services to users, but it is desired that only an administrator of the multi-domain system A is permitted to access the subsystem 100. In addition, there may also be a case where the NTP server 501 is not installed in the network 11 connecting the terminal devices 21 and 22 used by the administrator and the subsystem 100. In this case, the domains 200, 300 and 400 are capable of keeping the system clock accurate in time synchronization with the NTP server 500, whereas the subsystem 100 is not connectable to any of the NTP servers. Accordingly, the system clocks of the domains 200, 300 and 400 are supposed to be more accurate than the system clock of the subsystem 100. Therefore, the second embodiment adjusts the time of the system clock of the subsystem 100 using the system clocks of the domains 200, 300 and 400, when the domains 200, 300 and 400 are time synchronized with the NTP server 500. In this manner, the accuracy of the time of the system clock of the subsystem 100 may be improved.

In the following, functions and procedures to perform time adjustment according to the aforementioned operation status will be described in detail.

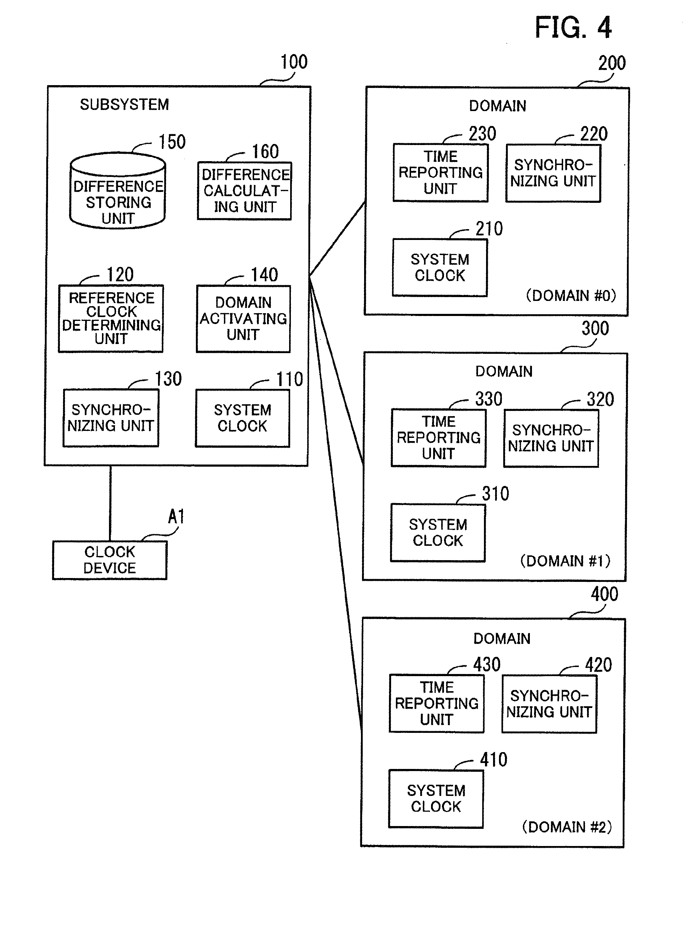

FIG. 4 is a block diagram illustrating a function of the multi-domain system according to the second embodiment. The subsystem 100 has a system clock 110, a reference clock determining unit 120, a synchronizing unit 130, a domain activating unit 140, a difference storing unit 150, and a difference calculating unit 160.

The system clock 110 is a clock implemented by the CPU 101 of the subsystem 100 with software. The subsystem 100 refers to the time of system clock 110 when there is a process of referring to the time of processes such as providing a predetermined event with a time stamp, or activating the domains 200, 300 and 400.

The reference clock determining unit 120 determines the clock whose time is supposed to be the reference, including clocks accessible via a network. In the second embodiment, as a clock available as a standard reference source of time, there are the clock device A1, the NTP server 501, and the system clocks 210, 310 and 410 of the domains 200, 300 and 400, respectively. The reference clock determining unit 120 determines appropriately a clock which is as accurate as possible, and defines the clock as the reference clock. The reference clock determining unit 120 then determines the time indicated by the reference clock to be the reference for time adjustment.

The synchronizing unit 130 synchronizes the time of system clock 110 with the time indicated by the reference clock. Here, time synchronization is a process of adjusting the time of a clock of synchronization target to the time of a clock of synchronization destination. For example, when the synchronizing unit 130 synchronizes the time of system clock 110 with the time of the NTP server 501, the same time as the time indicated by the NTP server 501 is set to the system clock 110.

The domain activating unit 140 performs activation control of the domains 200, 300 and 400. When activating one of the domains, the domain activating unit 140 transmits, to the domain to be activated, an activation instruction having time information added thereto. The time information added to the activation instruction is the time obtained by correcting the time indicated by the system clock 110 with the difference time corresponding to the domain to be activated.

Note that, the difference time for each domain is obtainable from the difference storing unit 150.

The difference storing unit 150 stores the difference time of the time of each of the domains 200, 300 and 400. For example, a part of the storage area of the memory 102 or the HDD 103 is used as the difference storing unit 150.

The difference calculating unit 160 obtains, from the domains 200, 300 and 400, the time indicated by each of the system clocks 210, 310 and 410. The difference calculating unit 160 then calculates the difference time between the time indicated by the system clocks 210, 310 and 410 of the respective domains 200, 300 and 400, and the time indicated by the system clock 110 in the subsystem 100. The difference calculating unit 160 stores the calculated difference time in the difference storing unit 150.

The domain 200 has a system clock 210, a synchronizing unit 220, and a time reporting unit 230.

The system clock 210 is a clock implemented by the CPU 201 of the domain 200 with software. The domain 200 refers to the time of system clock 210, when there is such a process of referring to the time as a process of providing a predetermined event with a time stamp.

The synchronizing unit 220 synchronizes the time of system clock 210 with the reference time. For example, the synchronizing unit 220 has a list of devices capable of NTP time synchronization. In the list of devices capable of time synchronization, for example, the NTP server 500 is registered on the top, and then the subsystem 100 is registered. The synchronizing unit 220 determines, sequentially in descending order of ranks in the list of devices capable of time synchronization, whether or not it is possible to communicate with the devices, and performs NTP time synchronization with the highest-ranked communicable devices.

The time reporting unit 230 reports, to the subsystem 100, the time indicated by the system clock 210 in the domain 200.

The domain 300 has a system clock 310, a synchronizing unit 320, and a time reporting unit 330. The domain 400 has a system clock 410, a synchronizing unit 420, and a time reporting unit 430. Each element of the domains 300 and 400 has the same function as the element of the domain 200 bearing the same name.

Each of the domains 200, 300 and 400 has a domain name set thereto. In the example of FIG. 4, the domain name of the domain 200 is "domain #0", the domain name of the domain 300 is "domain #1", and the domain name of the domain 400 is "domain #2".

Next, an exemplary data structure of the difference storing unit 150 will be described.

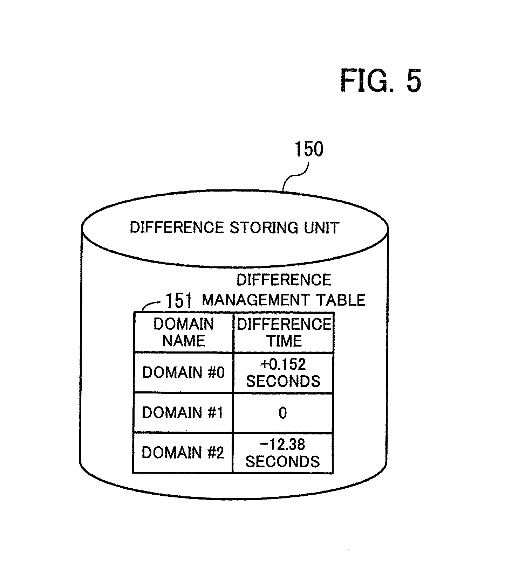

FIG. 5 illustrates an exemplary data structure of the difference storing unit. The difference storing unit 150 has a difference management table 151 stored therein. The difference management table 151 has provided therein columns for the domain name and the difference time.

The domain name column has provided therein respective names of the domains 200, 300 and 400 in the multi-domain system A. The difference time column has provided therein the difference time of a corresponding domain. In the example of FIG. 5, the difference time of the domain 200 bearing the domain name "domain #0" is "+0.152 seconds". The difference time of the domain 300 bearing the domain name "domain #1" is "0 second". The difference time of the domain 400 bearing the domain name "domain #2" is "-12.38 seconds".

According to the system having the configuration illustrated in FIGS. 3 to 5, the subsystem 100 and the domains 200, 300 and 400 adjust their own system clocks to the reference time as appropriate, the reference time being the appropriate clock at that time. In the second embodiment, it is assumed that the clocks of the NTP servers 500 and 501 have the highest precision, followed by the clock device A1 in the multi-domain system A having the next highest precision. In addition, the precision of the system clock 110 in the subsystem 100 is lower than the NTP servers 500 and 501, and the clock device A1. Similarly, the precision of the system clocks 210, 310 and 410 in the domains 200, 300 and 400 is also lower than the NTP servers 500 and 501, and the clock device A1. The reason why the precision of the system clocks is lower than the NTP servers 500 and 501, and the clock device A1 is as follows.

The clock device A1, being a hardware clock, is capable of obtaining a high precision using a crystal oscillator. On the other hand, the system clock 110, being a clock implemented by the CPU 101 with software, is accompanied by instability factors such as variation of load status of the CPU 101. Accordingly, its precision is lower than that of the clock device A1. In addition, the NTP server 500, being directly or indirectly connected to an accurate time source such as the Global Positioning System (GPS), the standard radio wave and the atomic clock, perform time adjustment as appropriate using very accurate time. As a result, the precision of the time of the system clock becomes relatively the lowest.

Here, it is up to the administrator whether or not to connect to the NTP servers 500 and 501 from the multi-domain system A. For example, the multi-domain system A may also be operated in a manner separated from the NTP server 500 or the NTP server 501.

The subsystem 100 determines an appropriate reference clock according to the configuration of the system being operated in such a manner.

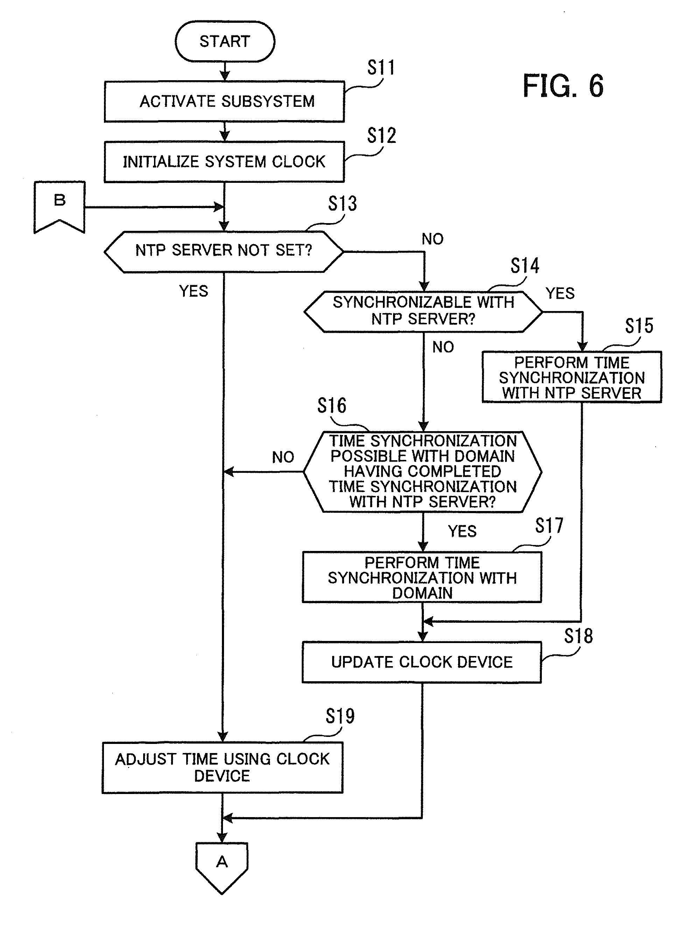

FIG. 6 is the first half of a flow chart illustrating the procedure of a time synchronization process in the subsystem. In the following, the procedure illustrated in FIG. 6 will be described along with step numbers.

[Step S11] The subsystem 100 is activated. For example, the subsystem 100 is activated when an activation request is input via the network 11.

[Step S12] The synchronizing unit 130 initializes the time of the system clock 110. For example, the synchronizing unit 130 reads the time of the clock device A1 and sets the read-out time as the initial value of the system clock 110.

[Step S13] The reference clock determining unit 120 determines whether or not an NTP server of synchronization target has not been set yet. For example, in the reference clock determining unit 120, whether to enable or disable the NTP has been preliminarily registered. When there is a setting to disable the NTP, the reference clock determining unit 120 determines that no NTP server of synchronization target has been set. In addition, the reference clock determining unit 120 has a list of devices capable of time synchronization. The list of devices capable of time synchronization includes, for example, addresses of devices such as the NTP server and the like. In addition, when no device is registered in the list of devices capable of time synchronization, the reference clock determining unit 120 determines that no NTP server of synchronization target has been set. When the NTP is enabled and at least one device is registered in the list of devices capable of time synchronization, the reference clock determining unit 120 determines a device to be the counterpart of time synchronization, giving priority to devices in descending order of registration in the list of devices capable of time synchronization.

Each of the domains 200, 300 and 400 in the multi-domain system A may also be registered in the list of devices capable of time synchronization. For example, the administrator of the multi-domain system A, after having registered the NTP server at a high rank in the list of devices capable of time synchronization, registers the domains 200, 300 and 400 at a lower rank than the NTP server. In the manner, even when the subsystem 100 itself is not time synchronizable with an external NTP server, the subsystem 100 may be time synchronized with the domains 200, 300 and 400 when the domains 200, 300 and 400 have been time synchronized with the external NTP server.

When no NTP server has been set, the reference clock determining unit 120 advances the procedure to step S19. When an NTP server has been set, the reference clock determining unit 120 advances the procedure to step S14.

[Step S14] The reference clock determining unit 120 determines whether or not it is synchronizable with the NTP server which has been set. For example, the reference clock determining unit 120 transmits to the set NTP server a command inquiring its state. When a response indicating normal operation is returned to the command, the reference clock determining unit 120 determines that the NTP server is synchronizable.

When a NTP server is synchronizable, the reference clock determining unit 120 determines the NTP server to the reference clock, and advances the procedure to step S15. When the NTP server is not synchronizable, the reference clock determining unit 120 advances the procedure to step S16.

[Step S15] The synchronizing unit 130 performs time synchronization with the registered NTP server, and adjusts the time of the system clock 110. Subsequently, the synchronizing unit 130 advances the procedure to step S18.

[Step S16] The reference clock determining unit 120 determines whether or not time synchronization is possible with a domain which has completed time synchronization with the NTP server. For example, the reference clock determining unit 120 inquires the domains 200, 300 and 400 whether or not the domains 200, 300 and 400 have successfully completed time synchronization with other NTP servers. For example, the reference clock determining unit 120 may confirm whether or not time synchronization has succeeded by transmitting a command inquiring the synchronization state to the domains 200, 300 and 400. For example, the reference clock determining unit 120 recognizes that synchronization with the NTP server has been completed for the domain that responded to the command inquiring the synchronization state insideformation indicating that synchronization has been normally completed. As a command inquiring the synchronization state, an ntpstat command may be used in Linux (registered trademark), for example.

When there is at least one domain which has completed time synchronization with the NTP server, the reference clock determining unit 120 determines that time synchronization is possible with the domain which has completed time synchronization with the NTP server. When time synchronization is possible with the domain which has completed time synchronization with the NTP server, the reference clock determining unit 120 advances the procedure to step S17. When, on the other hand, time synchronization is impossible with the domain which has completed time synchronization with the NTP server, the reference clock determining unit 120 advances the procedure to step S19.

[Step S17] The synchronizing unit 130 performs time synchronization with the domain which has completed time synchronization with the NTP server, and adjusts the time of the system clock 110.

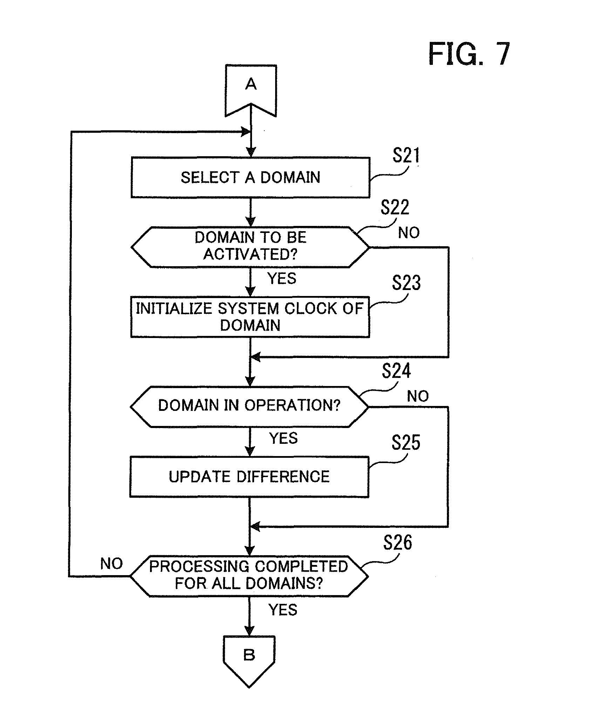

[Step S18] The synchronizing unit 130 updates the time of the clock device A1. For example, the synchronizing unit 130 writes the time indicated by the system clock 110 into the clock device A1. Subsequently, the synchronizing unit 130 advances the procedure to step S21 (see FIG. 7).

[Step S19] When no NTP server has been set or time synchronization with a domain or a NTP server has failed, the synchronizing unit 130 adjusts the time of the system clock 110 using the clock device A1. For example, the synchronizing unit 130 performs a time adjustment function preliminarily prepared in the OS, and synchronizes the time of the system clock 110 with the time of the clock device A1. As the time adjustment function, there is the adjtimex(2) function in Linux (registered trademark), for example. Subsequently, the synchronizing unit 130 advances the procedure to step S21 (see FIG. 7).

FIG. 7 is the latter half of the flow chart illustrating the procedure of the time synchronization process in the subsystem. In the following, the procedure illustrated in FIG. 7 will be described along with step numbers.

[Step S21] The domain activating unit 140 selects, among the domains in the multi-domain system A, a domain which has not been subject to processing in steps S22 to S25. For example, the domain activating unit 140 has a list of domain names in the multi-domain system A. The list of domain names has set therein a flag indicating whether or not a process has been completed. The domain activating unit 140 then selects, from the list of domain names, a domain for which an "unprocessed" flag has been set.

[Step S22] The domain activating unit 140 determines whether or not to activate the selected domain. For example, the domain activating unit 140 has preliminarily registered therein a domain name to be activated simultaneously with activation of the subsystem 100. The domain activating unit 140 then determines to activate a domain corresponding to a preliminarily registered identifier, in the first process of step S22 after activation of the subsystem 100. In addition, when an activation instruction of a domain is input from the administrator during operation of the subsystem 100, the domain activating unit 140 determines to activate the domain specified by the activation instructions in the first process of step S22 after the activation instruction.

Upon determining to activate the selected domain, the domain activating unit 140 advances the procedure to step S23. Upon determining not to activate the selected domain, on the other hand, the domain activating unit 140 advances the procedure to step S24.

[Step S23] The domain activating unit 140 transmits, to the selected domain, an activation request specifying the initial value of the time of the domain. The initial value of the time of the selected domain is the value obtained by adding the difference time of the corresponding domain indicated in the difference storing unit 150 to the time of the system clock 110 of the subsystem 100. The domain which received the activation request is activated upon setting the specified initial value to the initial value of the system clock of the domain.

[Step S24] The difference calculating unit 160 determines whether or not the selected domain is in operation. For example, the difference calculating unit 160 regularly transmits, to each of the domains 200, 300 and 400, a confirmation message whether or not they are in operation, and recognizes that the domain that responded is in operation. When the selected domain is in operation, the difference calculating unit 160 advances the procedure to step S25. When, on the other hand, the selected domain is being stopped, the difference calculating unit 160 advances the procedure to step S26.

[Step S25] The difference calculating unit 160 updates the difference time of the selected domain. For example, the difference calculating unit 160 performs polling to the selected domain. The time reporting unit of the selected domain in turn transmits the time of the system clock to the difference calculating unit 160. The difference calculating unit 160 calculates the difference time between the time of the system clock of the selected domain and the time of the system clock 110 of the subsystem 100. For example, the difference calculating unit 160 subtracts the time of the system clock 110 of the subsystem 100 from the time of the system clock of the selected domain. When the system clock of the selected domain is ahead of the system clock 110 of the subsystem 100, the difference time is a positive value. When the system clock of the selected domain is behind the system clock 110 of the subsystem 100, the difference time is a negative value.

[Step S26] The domain activating unit 140 determines whether or not the processing in steps S22 to S25 have been performed for all the domains. For example, the domain activating unit 140 sets a "process completed" flag to the domain name selected latest in the preliminarily held list of domain names. Subsequently, the domain activating unit 140 determines that all the domains have been processed when there is no domain name having an "unprocessed" flag set thereto in the list of domain names. When there is at least one domain name having an unprocessed flag set thereto in the list of domain names, the domain activating unit 140 determines that there exists an unprocessed domain.

When all the domains have been processed, the domain activating unit 140 initializes the process status of all the domains to "unprocessed". For example, the domain activating unit 140 sets an "unprocessed" flag to all the domain names in the list of domain names. Subsequently, the domain activating unit 140 advances the procedure to step S13 (see FIG. 6).

When there exists an unprocessed domain, the domain activating unit 140 advances the procedure to step S21.

In this manner, the subsystem 100 determines an appropriate clock to be the reference clock according to the connection status of the NTP server or the operation status of the domain, and adjusts the time of the system clock 110 to the reference clock.

Next, a difference time process of each domain will be described in detail.

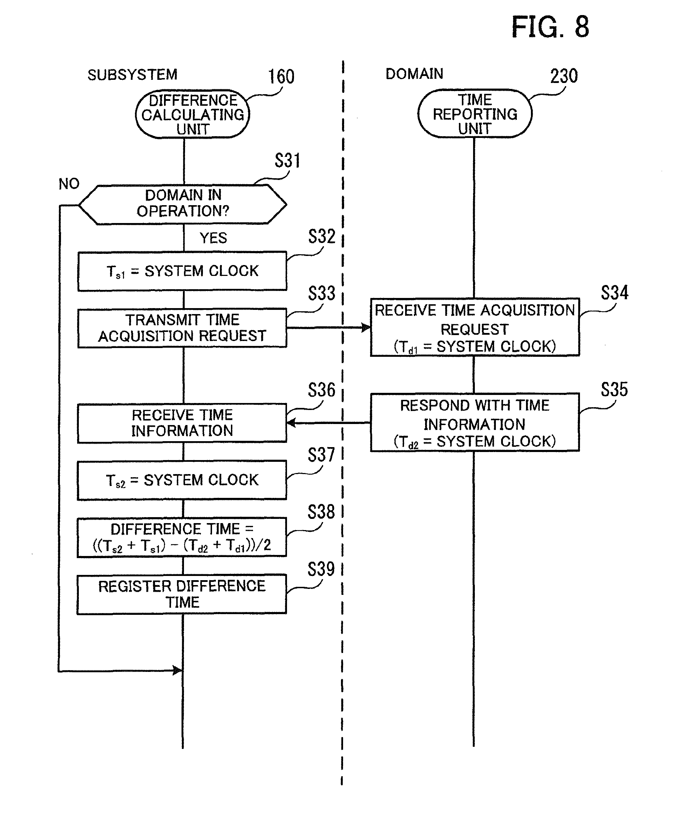

FIG. 8 is a sequence chart illustrating the procedure of the difference time updating process. In the following, the sequence chart illustrated in FIG. 8 will be described along with step numbers. FIG. 8 illustrates an example of updating the difference time of the domain 200.

[Step S31] The difference calculating unit 160 of the subsystem 100 determines whether or not the domain 200 is in operation. For example, the difference calculating unit 160 transmits, to the domain 200, a command inquiring whether or not it is in operation, and determines that the domain 200 is in operation when a correct response is received. When the domain 200 is in operation, the difference calculating unit 160 advances the procedure to step S32. When the domain 200 is not in operation, the difference calculating unit 160 terminates the process.

[Step S32] The difference calculating unit 160 sets the time of the system clock 110 to a variable $T_{s1}$. Here, the variable $T_{s1}$ is a variable indicating the start time of a time acquisition request to the domain 200.

[Step S33] The difference calculating unit 160 transmits a time acquisition request to the domain 200.

[Step S34] The time reporting unit 230 of the domain 200 receives the time acquisition request sent from the subsystem 100. In this occasion, the time reporting unit 230 sets the time of the system clock 210 to a variable $T_{d1}$. Here, the variable $T_{d1}$ is a variable indicating the acquisition time of the time acquisition request in the domain.

[Step S35] The time reporting unit 230 responds with time information to the subsystem 100. In this occasion, the time reporting unit 230 sets the time of the system clock 210 to a variable $T_{d2}$. Here, the variable $T_{d2}$ is a variable indicating the response time of the time acquisition request in the domain. The time information in the response includes the variables $T_{d1}$ and $T_{d2}$.

[Step S36] The difference calculating unit 160 of the subsystem 100 receives the time information sent from the domain 200.

[Step S37] The difference calculating unit 160 sets the time of the system clock 110 to a variable $T_{s2}$. Here, the variable $T_{s2}$ is a variable indicating the reception time of the time information from the domain 200.

[Step S38] The difference calculating unit 160 calculates the difference time. For example, the difference calculating unit 160 defines "difference time = $((T_{s2} + T_{s1}) - (T_{d2} + T_{d1}))/2$".

[Step S39] The difference calculating unit 160 stores the calculated difference time in the difference storing unit 150. Specifically, the difference calculating unit 160 changes the difference time of the domain name "domain #0" of the domain 200 in the difference management table 151 in the difference calculating unit 160 to the difference time calculated in step S38.

In the above manner, the difference time for each domain may be updated.

Here, the difference time is calculated, taking delay of communication into account.

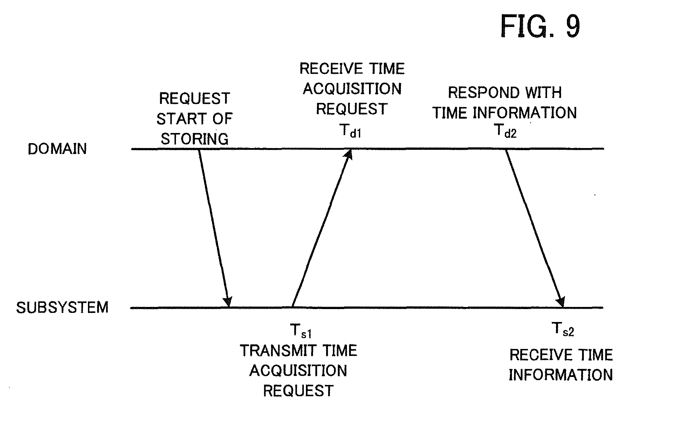

FIG. 9 illustrates the general concept of the difference time. When calculating the difference time, respective times of reception and response in the domain 200 and the subsystem 100 are stored. Using those times, the difference time not including communication delay time occurring between the domain 200 and the subsystem 100 may be calculated.

In the example of FIG. 9, calculation of the difference time is triggered by an event of the domain 200. In this case, a storage start request is issued from the time reporting unit 230 of the domain 200 to the subsystem 100 upon activation of the domain 200. Upon receiving the storage start request, the difference calculating unit 160 of the subsystem 100 adds the domain name of the domain 200 to the difference management table 151. In this occasion, an initial value (e.g., 0) is set to the difference time of the domain 200.

Subsequently, a time acquisition request is transmitted from the difference calculating unit 160 of the subsystem 100. The transmitted time acquisition request is received by the time reporting unit 230 of the domain 200. In this occasion, there exists a time difference due to communication delay in a range from the transmission time $T_{s1}$ of the time acquisition request to the reception time $T_{d1}$ of the time acquisition request.

Upon receiving the time acquisition request, the time reporting unit 230 responds with time information. The time information responded is received by the difference calculating unit 160 of the subsystem 100. In this occasion, there exists a time difference due to communication delay in a range from the transmission time $T_{d2}$ of the time information to the reception time $T_{s2}$ of the time information.

The average communication delay time of one way communication (communication delay time) is defined as communication delay time = $((T_{s2}-T_{s1}) - (T_{d2}-T_{d1}))/2$. The difference time indicating the difference between the system clock 210 of the domain 200 and the system clock 110 of the subsystem 100 turns out to be an accurate difference time by subtracting as much as the communication delay. This is expressed by the following formula.

$$\texttt{difference time} = T_{s2} - \texttt{communication delay time} - $$

$$T_{d2} = ((T_{s2}+T_{s1}) - (T_{d2}+T_{d1}))/2$$

Calculating the difference time taking into account the communication delay time in this manner allows the difference time to be calculated accurately.

Although FIGS. 8 and 9 describe an example of updating the difference time of the domain 200, a similar updating process of the difference time is performed independently of all the domains in operation. As a result, the difference time of each domain is calculated and stored in the difference storing unit 150.

In addition, the timing of calculating the difference time may be, besides being triggered by the event of the domain, shut down of the domain, time change of the domain, time change of the subsystem 100, or polling from the subsystem 100. When performing polling from the subsystem 100, the period of polling is set to be about once in 1000 seconds, for example, in order to reduce the load of the domain.

In the following, an exemplary time adjustment according to the operation status will be described specifically.

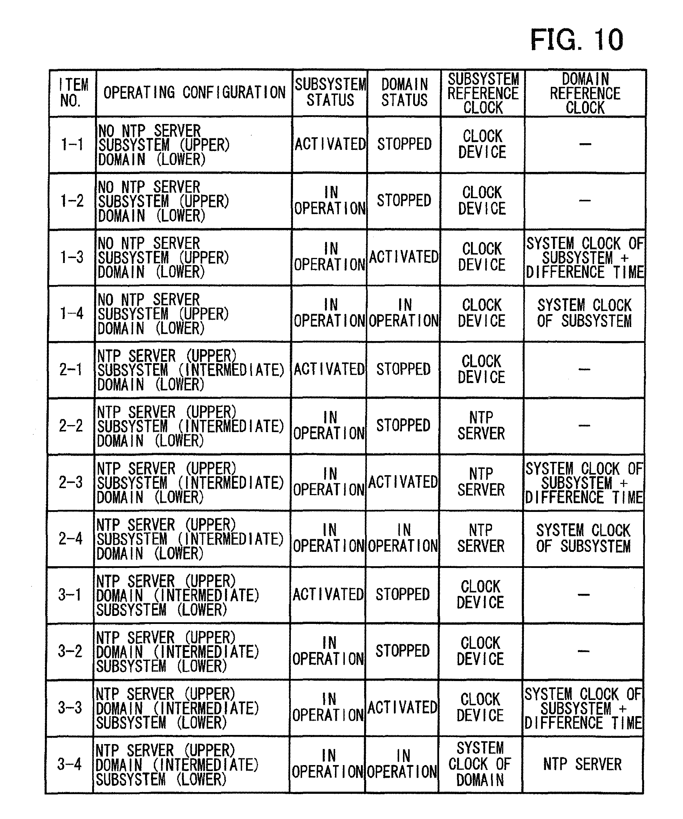

FIG. 10 illustrates an example of an appropriate reference clock of each device according to the operating configuration of the system. The relation of devices to each other is denoted as upper, intermediate, and lower. An intermediate device, when in operation, adjusts the time of its system clock using the time of an upper device. A lower device, when in operation, adjusts the time of its system clock using the time of an upper or an intermediate device.

Upon activation of each device, there is a limit on the device capable of obtaining time information. For example, the subsystem 100 and the domains 200, 300 and 400 are not capable of communicating with the NTP server 500 at the activation time. However, the domains 200, 300 and 400 are capable of obtaining time information from the subsystem 100 even at the activation time.

In addition, the domains 200, 300 and 400 are activated by an activation instruction from the subsystem 100. Therefore, the subsystem 100 is in operation before activation of the domains 200, 300 and 400.

Item numbers "1-1" to "1-4" of FIG. 10 each indicate an exemplary operating configuration (first operating configuration) in which the NTP server 500 is not connected to the multi-domain system A. In this case, the subsystem 100 is an upper device, with the domains 200, 300 and 400 being lower devices.

In this operation configuration, the reference clock for the subsystem 100 is supposed to be the clock device A1, at the activation time (item number "1-1") and during operation (item number "1-2") of the subsystem 100. For example, the synchronizing unit 130 of the subsystem 100 reads the time of the clock device A1 at the activation time and sets it to the initial value of the system clock 110. In addition, the synchronizing unit 130 of the subsystem 100 regularly performs a synchronizing command (e.g., the adjtimex(8) command of Linux (registered trademark)) during operation, and synchronizes the time of the system clock 110 with the time of the clock device A1.

Upon activation of the domains 200, 300 and 400 (item number "1-3"), the reference clock of the domain is supposed to be the system clock 110 of the subsystem 100. However, in this case, the system clocks 210, 310 and 410 of the domains 200, 300 and 400 are adjusted to a time obtained by correcting the time of the system clock 110 with the difference time. For example, upon activation of the domain 200, the domain activating unit 140 of the subsystem 100 transmits, to the domain 200, an activation request having added thereto time information indicating a time obtained by adding the difference time corresponding to the domain 200 to the system clock 110 of the subsystem 100. The CPU 201 of the domain 200 then activates the domain 200, with the time indicated in the time information added to the activation request being the initial value of the system clocks 210, 310 and 410.

The reference clock of the domain is the system clock 110 of the subsystem 100 during operation of the domains 200, 300 and 400 (item number "1-4"). For example, the synchronizing units 220, 320 and 420 regularly synchronize the time of the system clocks 210, 310 and 410 to the time of the system clock 110 of the subsystem 100 with the NTP.

Item numbers "2-1" to "2-4" of FIG. 10 each indicate an exemplary operating configuration (second operating configuration) in which the NTP server 501 is connected to the subsystem 100. In this case, the NTP server 501 is an upper device, with the subsystem 100 being an intermediate device and the domains 200, 300 and 400 being a lower device.

In this operation configuration, the reference clock for the subsystem 100 is supposed to be the clock device A1, upon activation of the subsystem 100 (item number "2-1"). The reference clock for the subsystem 100 is the NTP server 501 during operation of the subsystem 100 (item number "2-2"). For example, the synchronizing unit 130 of the subsystem 100 regularly synchronizes the time of the system clock 110 with the time of the NTP server 501.

Upon activation of the domains 200, 300 and 400 (item number "2-3"), the reference clock of the domain is the system clock 110 of the subsystem 100. However, in this case, the system clocks 210, 310 and 410 of the domains 200, 300 and 400 are adjusted to a time obtained by correcting the time of the system clock 110 with the difference time. The reference clock of the domain during operation of the domains 200, 300 and 400 (item number "2-4") is the system clock 110 of the subsystem 100.

Item numbers "3-1" to "3-4" of FIG. 10 each indicate an exemplary operating configuration (third operating configuration) in which the NTP server 500 is connected to the domains 200, 300 and 400. In this case, the NTP server 500 is an upper device, with the domains 200, 300 and 400 being intermediate devices and the subsystem 100 being a lower device.

In this operation configuration, the reference clock for the subsystem 100 is supposed to be the clock device A1, upon activation of the subsystem 100 (item number "3-1"). When no domain is in operation during operation of the subsystem 100 (item number "3-2"), the reference clock for the subsystem 100 is supposed to be the clock device A1. When, on the other hand, at least one domain is in operation during operation of the subsystem 100, the reference clock for the subsystem 100 is supposed to be the system clock of the domain in operation. In this case, the synchronizing unit 130 of the subsystem 100 synchronizes, regularly using the NTP, the time of the system clock 110 with the time of the system clock of a subsystem in operation.

Upon activation of the domains 200, 300 and 400 (item number "3-3") the reference clock of the domain is supposed to be the system clock 110 of the subsystem 100. However, in this case, the system clocks 210, 310 and 410 of the domains 200, 300 and 400 are adjusted to a time obtained by correcting the time of the system clock 110 with the difference time. The reference clock of the domain during operation of the domains 200, 300 and 400 (item number "3-4") is supposed to be the NTP server 500. In this case, the synchronizing units 220, 320 and 420 of the domains 200, 300 and 400 synchronize, regularly using the NTP, the time of the system clocks 210, 310 and 410 with the time of the NTP server 500.

Next, an exemplary change of the reference clock when the operating configuration illustrated in FIG. 10 varies during operation will be described.

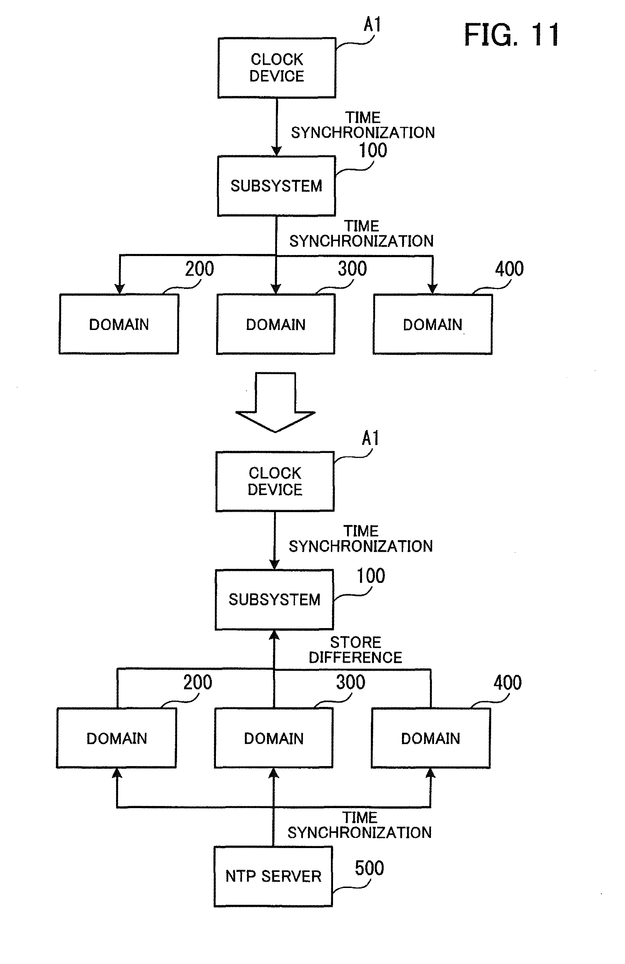

FIG. 11 illustrates a first exemplary operation status of the multi-domain system. The first exemplary operation status is an example when the NTP server is not connected to the subsystem 100. Also in the example of FIG. 11, the subsystem 100 does not perform time synchronization with the system clocks 210, 310 and 410 of the domains 200, 300 and 400, either.

In the initial state of FIG. 11 (upper part of FIG. 11), the NTP server is not connected to any of the subsystem 100 and the domains 200, 300 and 400. Subsequently, the NTP server 500 is connected to the domains 200, 300 and 400 during operation (lower part of FIG. 11).

In the initial state, there is no device in the multi-domain system A connected to the NTP server. Therefore, the time of the clock device A1 is most reliable. In other words, the clock device A1 is supposed to be the reference clock. Accordingly, the time of the clock device A1 is communicated to the subsystem 100, and time adjustment of the system clock 110 in the subsystem 100 is performed.

In addition, the domains 200, 300 and 400 perform time synchronization with the subsystem 100 using the NTP. For example, the time indicated by the system clock 110 of the subsystem 100 is communicated to the domains 200, 300 and 400, and the time of the system clocks 210, 310 and 410 in the domains 200, 300 and 400 is adjusted to the time indicated by the system clock 110.

Since the clock precision of the clock device A1 is higher than the system clock 110, the clock precision of the entire system may be kept high in an environment without the NTP server.

Upon connection of the NTP server 500 to the domains 200, 300 and 400 in operation, the domains 200, 300 and 400 perform time synchronization with the NTP server 500 using the NTP. For example, the time indicated by the NTP server 500 is communicated to the domains 200, 300 and 400, and the time of the system clocks 210, 310 and 410 in the domains 200, 300 and 400 is adjusted to the time of time information provided from the NTP server 500. The system clocks 210, 310 and 410 in the domains 200, 300 and 400 are adjusted to the time of the NTP server 500.

When the NTP server 500 is connected to the domains 200, 300 and 400 in operation, the time indicated by the system clocks 210, 310 and 410 of the respective domains 200, 300 and 400 is supposed to be more accurate than the time indicated by the system clock 110 of the subsystem 100. A difference time indicating the difference between the time indicated by the system clock 110 of the subsystem 100 and the time indicated by the system clocks 210, 310 and 410 of the respective domains 200, 300 and 400 is held in the difference storing unit 150. Setting the difference time as the initial value of the system clocks 210, 310 and 410 upon activation of the domains 200, 300 and 400 allows activation with the difference time immediately before stop being held even when there is a stop period of the domains 200, 300 and 400.

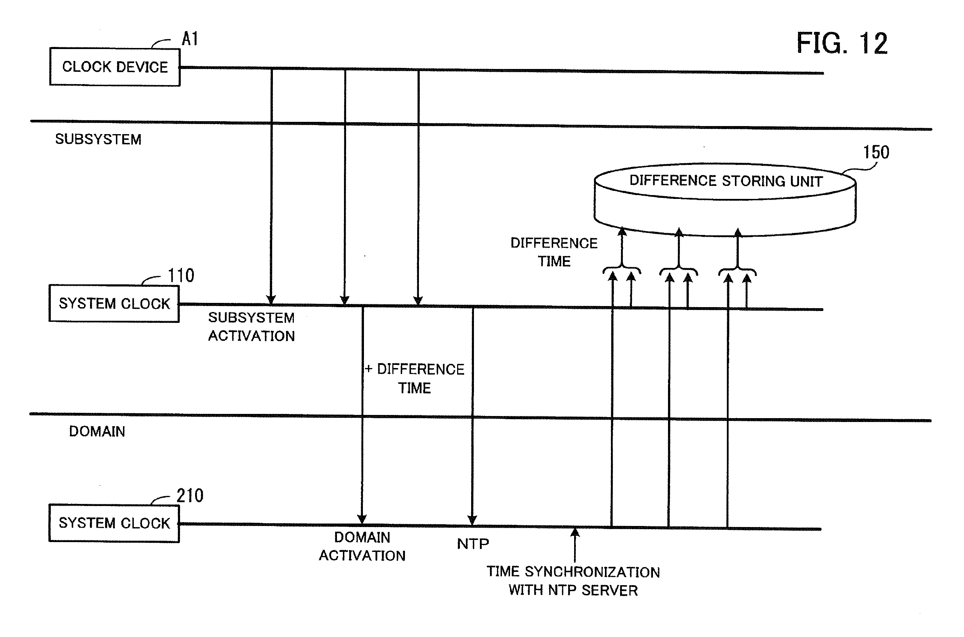

FIG. 12 illustrates time adjustment in the first exemplary operation status of the multi-domain system in chronological order. Upon activation of the subsystem 100, the time of the clock device A1 is set to the system clock 110. Subsequently, the time of the clock device A1 is read by the synchronizing unit 130 of the subsystem 100 regularly, and the time of the system clock 110 is updated.

Upon activation of the domain 200, a time obtained by adding the difference time of the domain 200 to the time indicated by the system clock 110 of the subsystem 100 is set to the system clock 210 of the domain 200. Subsequently, while the domain 200 is not connected to the NTP server 500, the domain 200 performs time synchronization of the system clock 210 with the system clock 110 of the subsystem 100 using NTP and adjusts the time of the system clock 210.

Upon connection of the domain 200 to the NTP server 500, time synchronization with the NTP server 500 causes the time indicated by the NTP server 500 to be set to the system clock 210. In the subsystem 100, the difference time between the time indicated by the system clock 210 of the domain 200 and the time indicated by the system clock 110 of the subsystem 100 is calculated and stored regularly in the difference storing unit 150. Storing of the difference time is performed regularly until the domain 200 is stopped (shut down). Updating the difference time regularly causes the operation of the domain 200 to be stopped, and in the event of reactivation, the domain 200 is activated with an accurate time which has been adjusted with the difference time.

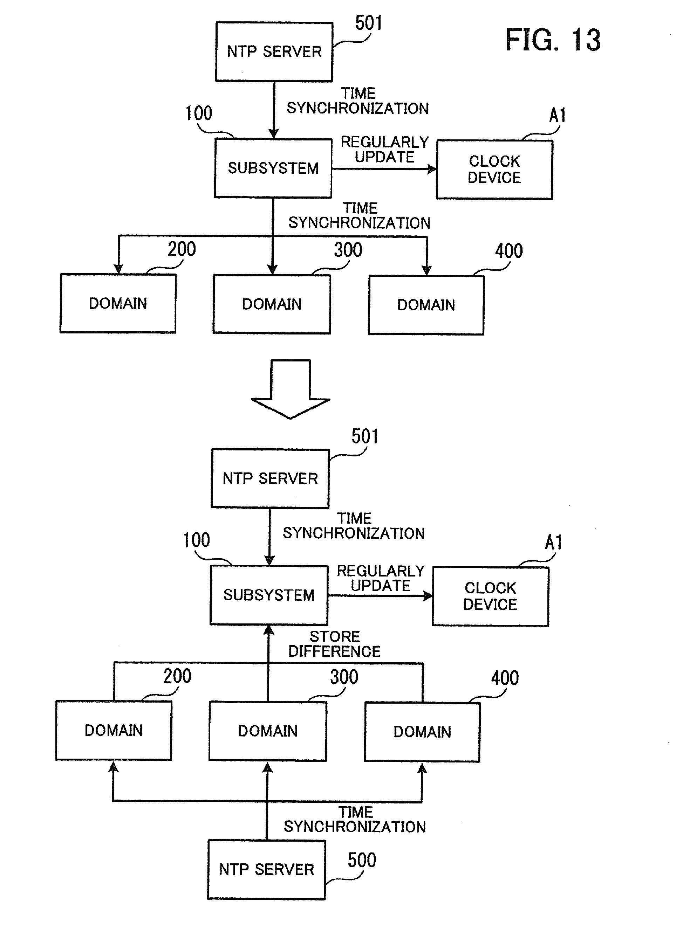

FIG. 13 illustrates a second exemplary operation status of the multi-domain system. The second exemplary operation status is an example when the NTP server is connected to the subsystem. In the example of FIG. 13, the NTP server 501 is connected to the subsystem 100 in the initial state (upper section of FIG. 13), whereas the NTP server is not connected to the domains 200, 300 and 400. Subsequently, the NTP server 500 is connected to the domains 200, 300 and 400 in operation (lower part of FIG. 13).

In the initial state, the NTP server 501 is supposed to be the reference clock. Therefore, the subsystem 100 performs time synchronization with the NTP server 501, and the time of the system clock 110 of the subsystem 100 is adjusted to the time indicated by the NTP server 501. In addition, the domains 200, 300 and 400 perform time synchronization with the subsystem 100 using the NTP.

Upon connection of the NTP server 500 to the domains 200, 300 and 400 in operation, the domains 200, 300 and 400 perform time synchronization with the NTP server 500 using the NTP.

Connecting the domains 200, 300 and 400 to the NTP server 500 which is different from the subsystem 100 may cause a difference between the times of the subsystem 100 and the domains 200, 300 and 400. Therefore, a difference time indicating the difference between the time indicated by the system clock 110 of the subsystem 100 and the time indicated by the system clocks 210, 310 and 410 of the respective domains 200, 300 and 400 is held in the difference storing unit 150. Setting the difference time as the initial value of the system clocks 210, 310 and 410 upon activation of the domains 200, 300 and 400 allows activation with the difference time immediately before stop being held even when there is a stop period of the domains 200, 300 and 400.

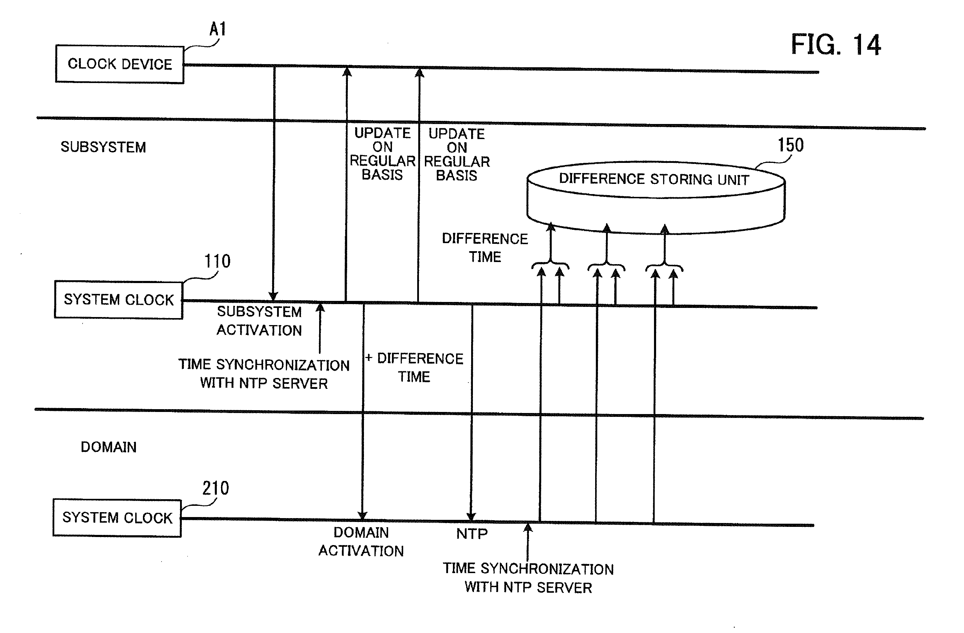

FIG. 14 illustrates time adjustment in the second exemplary operation status of the multi-domain system in chronological order. Upon activation of the subsystem 100, the time of the clock device A1 is set to the system clock 110. After activation of the subsystem 100 has been completed, the time indicated by the NTP server 501 is set to the system clock 110 by time synchronization with the NTP server 501. Subsequently, the time of the clock device A1 is updated regularly to the time indicated by the system clock 110.

Upon activation of the domain 200, a time obtained by adding the difference time of the domain 200 to the time indicated by the system clock 110 of the subsystem 100 is set to the system clock 210 of the domain 200. Subsequently, while the domain 200 is not connected to the NTP server 500, the domain 200 performs time synchronization of the system clock 210 with the system clock 110 of the subsystem 100 using NTP and adjusts the time of the system clock 210.

Upon connection of the domain 200 to the NTP server 500, time synchronization with the NTP server 500 causes the time indicated by the NTP server 500 to be set to the system clock 210. In the subsystem 100, the difference time between the time indicated by the system clock 210 of the domain 200 and the time indicated by the system clock 110 of the subsystem 100 is calculated regularly and stored in the difference storing unit 150. Storing of the difference time is performed regularly, until the domain 200 is stopped (shut down). Updating the difference time regularly causes the operation of the domain 200 to be stopped, and in the event of reactivation, the domain 200 is activated with an accurate time adjusted with the difference time.

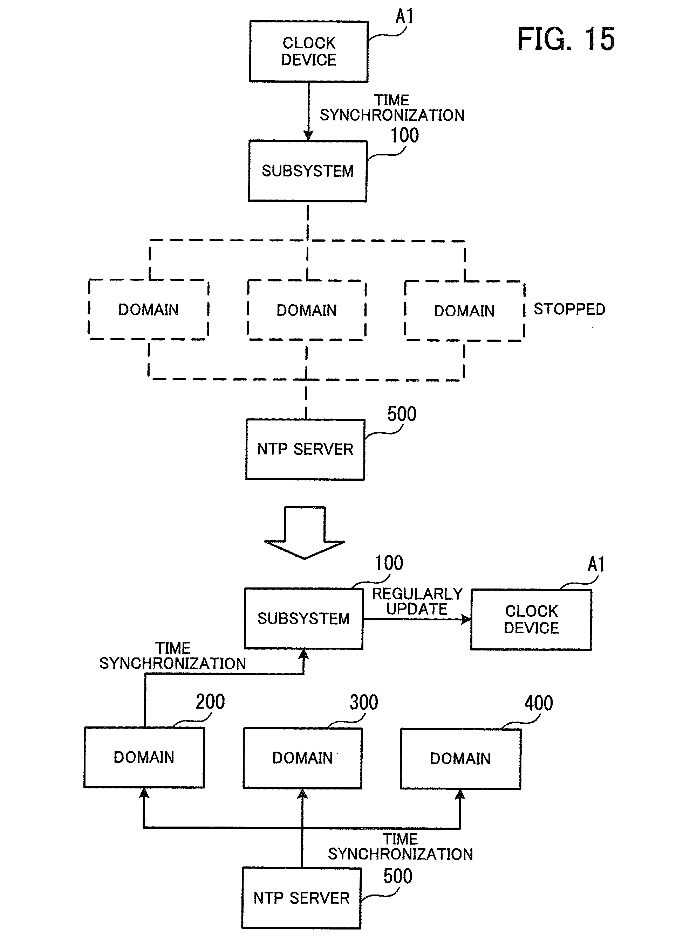

FIG. 15 illustrates a third exemplary operation status of the multi-domain system. The third exemplary operation status is an example when the NTP server is connected to the domain. In the initial state of FIG. 15 (upper section of FIG. 15), the NTP server is not connected to the subsystem 100 but the NTP server 500 is connected to the domains 200, 300 and 400, with the domains 200, 300 and 400 being stopped. Subsequently, the domains 200, 300 and 400 are activated, and operation thereof is started (lower part of FIG. 15).

In the initial state, the clock device A1 is supposed to be the reference clock. Therefore, the time of the clock device A1 is communicated to the subsystem 100, and time adjustment of the system clock 110 in the subsystem 100 is performed.

Upon activation and start of operation of the domains 200, 300 and 400, the domains 200, 300 and 400 perform time synchronization with the NTP server 500 using the NTP. Starting operation of the domains 200, 300 and 400 causes the reference clock to be changed from the clock device A1 to the NTP server 500. Accordingly, the subsystem 100 performs time synchronization with one of the domains 200, 300 and 400 adjacent to the NTP server 500. In addition, the subsystem 100 regularly updates the time of the clock device A1 with the time indicated by the system clock 110.

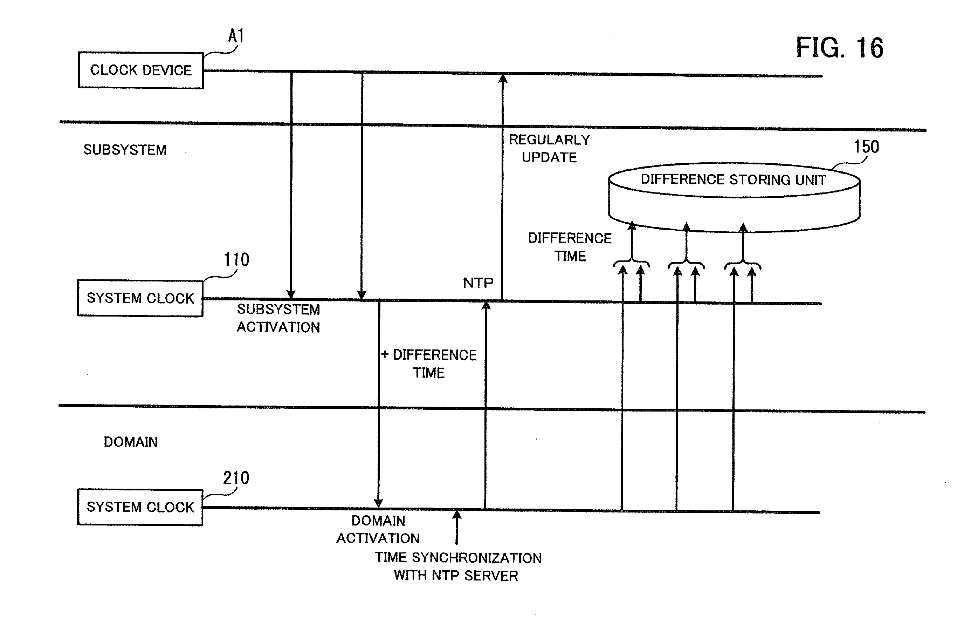

FIG. 16 illustrates time adjustment in the third exemplary operation status of the multi-domain system in chronological order. Upon activation of the subsystem 100, the time of the clock device A1 is set to the system clock 110. Subsequently, the time of the clock device A1 is read by the synchronizing unit 130 of the subsystem 100 regularly, and the time of the system clock 110 is updated.

Upon activation of the domain 200, a time obtained by adding the difference time of the domain 200 to the time indicated by the system clock 110 of the subsystem 100 is set to the system clock 210 of the domain 200. When the domain 200 has been activated and entered the operation state, the domain 200 performs time synchronization of the system clock 210 using the NTP server 500 and the NTP.

Upon completion of time synchronization with the NTP server 500 of the domain 200, the subsystem 100 performs time synchronization of the system clock 110 with the system clock 210 of the domain 200 using the NTP.

The subsystem 100, after time synchronization with the domain 200, regularly updates the time of the clock device A1 with the time indicated by the system clock 110.

Additionally, in the subsystem 100 a difference time between the time indicated by the system clock 210 of the domain 200 and the time indicated by the system clock 110 of the subsystem 100 is calculated regularly and stored in the difference storing unit 150. Storing of the difference time is performed regularly until the domain 200 is stopped (shut down).

In the above manner, time precision of the entire multi-domain system A is guaranteed by the NTP server 500 connected to the domain. In other words, time adjustment of the system clock 110 of the subsystem 100 may be performed using a clock indicating a more accurate time in the operation status at each point in time even when the operation status of the multi-domain system A has changed. As a result, it is possible to keep the system clock 110 of the subsystem 100 accurate.

In addition, the difference between the system clocks 210, 310 and 410 of the domains 200, 300 and 400, and the system clock 110 of the subsystem 100 is calculated regularly and held in the subsystem 100. Accordingly, when reactivating the domains 200, 300 and 400, the activation may be performed with the initial value being a time reflecting the difference time of the previous operation to the reactivation time. Accordingly, it is possible to suppress occurrence of a failure such as inconsistency of time information due to reactivation of the domains 200, 300 and 400.

Furthermore, when the system clock 110 of the subsystem 100 is synchronized with a clock (e.g., NTP server) which is more accurate than the clock device A1, the time is adjusted to the time of the clock device A1 using the time of the system clock 110. Accordingly, it is possible to keep the time indicated by the clock device A1 more accurate. As a result, it is possible to perform reactivation using an accurate time when the subsystem 100 is reactivated.

The user may set an arbitrary time for the system clocks 210, 310 and 410 in the domains 200, 300 and 400. For example, when using a single domain for a software operation test, a different time from the current time is set to the system clock. Also in such case, the subsystem 100 holding the difference time allows a time maintaining the difference which has been set by a user in the past to be set as the initial value of the subsystem of the domain even when the domain is reactivated. In a case where the time of the domain is intentionally shifted, time synchronization with the NTP server of the domain is not performed.

[Third Embodiment]

It is also possible to incorporate a hardware clock in each of the domains 200, 300 and 400 illustrated in the second embodiment.

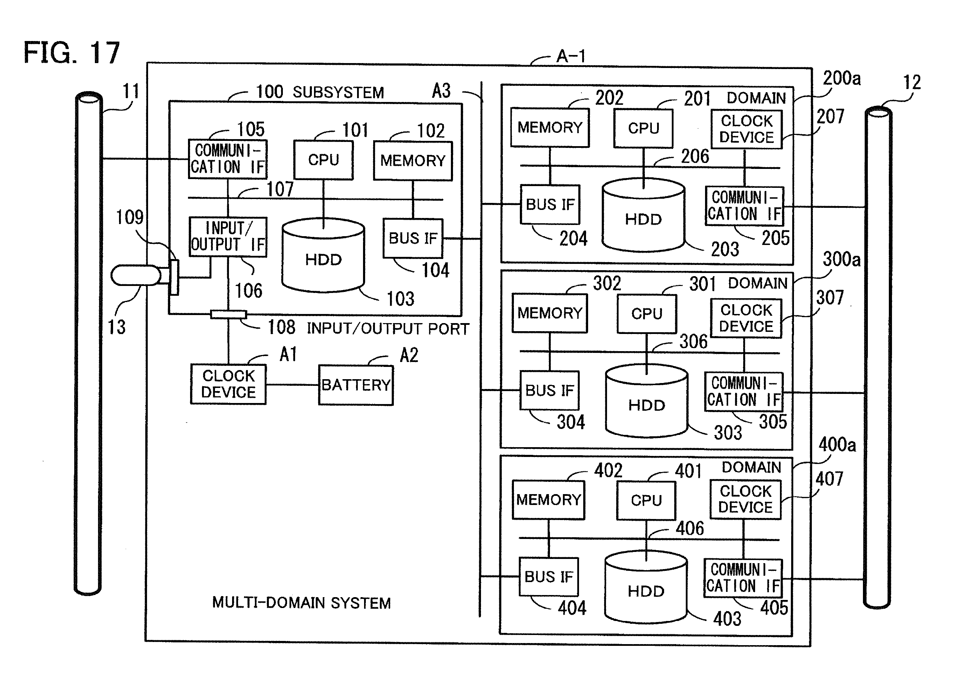

FIG. 17 illustrates an exemplary hardware configuration of a multi-domain system according to a third embodiment. Of the hardware components of the third embodiment, those having the same function as the second embodiment are provided with the same codes, and description thereof will be omitted.

Domains 200a, 300a and 400a which are incorporated in the multi-domain system A-1 of the third embodiment respectively have clock devices 207, 307 and 407. The clock devices 207, 307 and 407 are respectively connected to buses 206, 306 and 406.

When the respective domains 200a, 300a and 400a have the clock devices 207, 307 and 407, it is possible to allow referring/updating of the time of the clock devices 207, 307 and 407 of the domains 200a, 300a and 400a from the subsystem 100. Accordingly, setting and displaying different times respectively for the domains 200a, 300a and 400a becomes possible. For example, with Linux (registered trademark), different times may be set or displayed for the respective domains 200a, 300a and 400a by the following commands.

In order to refer to the respective clock devices 207, 307 and 407 of the domains 200a, 300a and 400a from the subsystem 100, the following commands are executed.

```
#showtod
```

Executing this command causes the following information, for example, to be displayed on the screen of a terminal device 21.
Domain#0 : Thu Feb 18 11:32:38 JST 2010
Domain#1 : Thu Feb 18 11:32:38 JST 2010
Domain#2 : Thu Feb 18 11:32:38 JST 2010
In addition, the following command allows the time of the clock devices 207, 307 and 407 of the domains 200a, 300a and 400a to be updated.

```
#settod domain#0 Thu Feb 18 18:33:00 JST 2010
```

The updated time is reflected in the OS after reactivation of the domains 200a, 300a and 400a.
In addition, the following command allows the clock devices 207, 307 and 407 of the domains 200a, 300a and 400a to be synchronized with the time of the subsystem.

```
#settod domain#0 subsystem
```

The updated time is reflected in the OS after reactivation of the domains 200a, 300a and 400a.
Furthermore, the following command allows the clock devices 207, 307 and 407 of all the domains 200a, 300a and 400a to be synchronized with the time of the subsystem.

#settod subsystem

The updated time is reflected in the OS after reactivation of the domains 200a, 300a and 400a.
[Other Embodiments]
The processing functions illustrated in respective embodiments described above may be realized by a computer. In such a case, a program is provided having a description about the processing functions of the subsystem or the domains. Executing the program on a computer realizes the processing functions on the computer. The program having a description about the processing may be stored on a computer-readable storage medium. As a computer-readable storage medium, there is a magnetic storage device, an optical disk, a magneto-optical storage medium, a semiconductor memory, or the like. As a magnetic storage device, there is a hard disk drive (HDD), a flexible disk (FD), a magnetic tape, or the like. As an optical disk, there is a DVD, a DVD-RAM, a CD-ROM/RW, or the like. As a magneto-optical storage medium, there are an MO (Magneto-Optical disc), or the like.
When distributing a program, a portable storage medium having the program stored thereon such as a DVD, a CD-ROM, or the like, for example, is sold. In addition, the program may be stored in a storage device of a server computer, and the program may be transferred to other computers from the server computer via a network.
A computer executing a program stores a program recorded on a portable storage medium or a program transferred from a server computer, for example, in its own storage device of the computer. The computer then reads the program from its own storage device and performs a procedure according to the program. The computer may also read the program directly from the portable storage medium and perform a procedure according to the program. In addition, the computer may also perform, each time a program is transferred from the server computer, a procedure according to the received program.
In addition, at least a part of the processing functions described above may also be realized by an electronic circuit such as a DSP (Digital Signal Processor), an ASIC (Application Specific Integrated Circuit), a PLD (Programmable Logic Device), or the like.
The foregoing description merely presents the principle of the invention. Furthermore, a variety of variations or modifications may be made by those skilled in the art, without limiting the invention to the strict configurations and examples illustrated and described above, and all the corresponding variations and equivalents are considered to be inside a range of the invention as defined by appended claims and equivalents thereof.

Reference Signs List

1    information processing apparatus
1a    timing means
1b    determining means
1c    time adjusting means
1d    calculating means
1e    storage means
1f    activating means
2    clock device
3    server
4    device under management
5, 6    time information
7    difference time
8    activation request

**Claims**

1. An information processing apparatus managing a device under management which performs data processing in response to a request, comprising:

timing means;
determining means for recognizing the device under management as one of devices providing time information, and determining a device that provides the most accurate time information among devices providing time information obtainable under current operation status; and
time adjusting means for obtaining time information from the determined device, and adjusting a time of the timing means to a time indicated by the obtained time information.

2. The information processing apparatus according to claim 1, further comprising:

calculating means for obtaining time information indicated by timing means inside the device under management, and calculating a difference time between the time indicated by the obtained time information and the time indicated by the timing means; and

activating means for specifying a time obtained by adding the difference time of the device under management to the time indicated by the timing means as an initial value of the timing means inside the device under management, and activating the device under management, when the operation of the device under management is stopped and then activated.

3. The information processing apparatus according to claim 2, wherein the calculating means regularly obtains a time indicated by an internal clock of the device under management.

4. The information processing apparatus according to any of claims 1 to 3,
wherein the information processing apparatus recognizes a clock device backed up by a battery as one of devices providing obtainable time information, and
wherein the determining means determines the clock device as a device that provides the most accurate time information, upon activation of the information processing apparatus.

5. The information processing apparatus according to any of claims 1 to 4, wherein, when time information is obtainable from a server providing time information in response to a request while the information processing apparatus is in operation, the determining means determines the server as a device that provides the most accurate time information.

6. The information processing apparatus according to claim 5, wherein, when time information is not obtainable from a server providing time information in response to a request while the information processing apparatus is in operation, the determining means, when time information is obtainable from a device which has adjusted time with the server, determines the device as a device that provides the most accurate time information.

7. The information processing apparatus according to claim 6, wherein, when time information is not obtainable from a server providing time information in response to a request from another device and time information is also not obtainable from a device which has adjusted time with the server while the information processing apparatus is in operation, the determining means determines a clock device backed up by a battery as a device that provides the most accurate time information.

8. The information processing apparatus according to any of claims 5 to 7, wherein, when the timing means is set to a time indicated by time information obtained from a device other than a clock device backed up by a battery while the information processing apparatus is in operation, the time adjusting means adjusts the time of the clock device to the time indicated by the timing means.

9. The information processing apparatus according to any of claims 1 to 8, wherein the timing means is realized by execution of software by the information processing apparatus.

10. A time setting method executed by an information processing apparatus managing a device under management which performs data processing in response to a request, the time setting method comprising:

recognizing the device under management as one of devices providing time information, and determining a device that provides the most accurate time information among devices providing time information obtainable under current operation status; and

obtaining time information from the determined device, and adjusting a time of timing means inside the information processing apparatus to a time indicated by the obtained time information.

11. A time setting program causing an information processing apparatus which manages a device under management that performs data processing in response to a request to perform a procedure comprising:

recognizing the device under management as one of devices providing time information, and determining a device that provides the most accurate time information among devices providing time information obtainable under current operation status; and

obtaining time information from the determined device, and adjusting a time of timing means inside the information processing apparatus to a time indicated by the obtained time information.

**FIG. 1**

SERVER
3

INFORMATION
PROCESSING
APPARATUS
1

1b
DETERMINING
MEANS

5
TIME
INFORMATION

1c
TIME
ADJUSTING
MEANS

DEVICE UNDER
MANAGEMENT
4

1a
TIMING MEANS

1f
ACTIVATING
MEANS

ACTIVATION
REQUEST

8

1e
STORAGE
MEANS

7
DIFFERENCE
TIME

1d
CALCULATING
MEANS

6
TIME
INFORMATION

2
CLOCK
DEVICE

19

# FIG. 2

TERMINAL
DEVICE
31

TERMINAL
DEVICE
32

500 NTP SERVER

12

NETWORK

A MULTI-DOMAIN SYSTEM

11

NETWORK

TERMINAL
DEVICE
21

TERMINAL
DEVICE
22

501 NTP SERVER

# FIG. 3

A

100 SUBSYSTEM

A3

**COMMUNI-CATION IF** 105

**CPU** 101

**MEMORY** 102

107

**INPUT/OUTPUT IF** 106

**HDD** 103

**BUS IF** 104

109

13

108 INPUT/OUTPUT PORT

A1

A2

**CLOCK DEVICE**

**BATTERY**

11

12

200

**MEMORY** 202

**CPU** 201

DOMAIN

206

**BUS IF** 204

**HDD** 203

**COMMUNI-CATION IF** 205

300

**MEMORY** 302

**CPU** 301

DOMAIN

306

**BUS IF** 304

**HDD** 303

**COMMUNI-CATION IF** 305

400

**MEMORY** 402

**CPU** 401

DOMAIN

406

**BUS IF** 404

**HDD** 403

**COMMUNI-CATION IF** 405

MULTI-DOMAIN SYSTEM

EP 2 677 434 A1

FIG. 4

100

**SUBSYSTEM**

150 DIFFERENCE STORING UNIT

160 DIFFERENCE CALCULAT- ING UNIT

120 REFERENCE CLOCK DETERMINING UNIT

140 DOMAIN ACTIVATING UNIT

130 SYNCHRO- NIZING UNIT

110 SYSTEM CLOCK

A1 CLOCK DEVICE

200

**DOMAIN**

230 TIME REPORTING UNIT

220 SYNCHRO- NIZING UNIT

210 SYSTEM CLOCK

(DOMAIN #0)

300

**DOMAIN**

330 TIME REPORTING UNIT

320 SYNCHRO- NIZING UNIT

310 SYSTEM CLOCK

(DOMAIN #1)

400

**DOMAIN**

430 TIME REPORTING UNIT

420 SYNCHRO- NIZING UNIT

410 SYSTEM CLOCK

(DOMAIN #2)

FIG. 5

150

DIFFERENCE STORING UNIT

DIFFERENCE
151 MANAGEMENT TABLE

| DOMAIN NAME | DIFFERENCE TIME |
|---|---|
| DOMAIN #0 | +0.152 SECONDS |
| DOMAIN #1 | 0 |
| DOMAIN #2 | −12.38 SECONDS |

FIG. 6

START

ACTIVATE SUBSYSTEM  S11

INITIALIZE SYSTEM CLOCK  S12

B

S13
NTP SERVER NOT SET?  — NO →

YES

S14
SYNCHRONIZABLE WITH NTP SERVER?  — YES →

NO

S15
PERFORM TIME SYNCHRONIZATION WITH NTP SERVER

S16
TIME SYNCHRONIZATION POSSIBLE WITH DOMAIN HAVING COMPLETED TIME SYNCHRONIZATION WITH NTP SERVER?  ← NO

YES

S17
PERFORM TIME SYNCHRONIZATION WITH DOMAIN

S18
UPDATE CLOCK DEVICE

S19
ADJUST TIME USING CLOCK DEVICE

A

## FIG. 7

A

SELECT A DOMAIN — S21

DOMAIN TO BE ACTIVATED? — S22 → NO

YES

INITIALIZE SYSTEM CLOCK OF DOMAIN — S23

DOMAIN IN OPERATION? — S24 → NO

YES

UPDATE DIFFERENCE — S25

PROCESSING COMPLETED FOR ALL DOMAINS? — S26

NO

YES

B

# FIG. 8

SUBSYSTEM 160

DIFFERENCE
CALCULATING
UNIT

DOMAIN 230

TIME
REPORTING
UNIT

S31

NO ← DOMAIN IN OPERATION?

YES S32

$T_{s1}$ = SYSTEM CLOCK

S33

TRANSMIT TIME ACQUISITION REQUEST

S34

RECEIVE TIME ACQUISITION REQUEST
($T_{d1}$ = SYSTEM CLOCK)

S36

RECEIVE TIME INFORMATION

S35

RESPOND WITH TIME INFORMATION
($T_{d2}$ = SYSTEM CLOCK)

S37

$T_{s2}$ = SYSTEM CLOCK

S38

DIFFERENCE TIME =
$((T_{s2} + T_{s1}) - (T_{d2} + T_{d1}))/2$

S39

REGISTER DIFFERENCE TIME

# FIG. 9

DOMAIN

REQUEST
START OF
STORING

RECEIVE TIME
ACQUISITION
REQUEST
$T_{d1}$

RESPOND WITH
TIME INFORMATION
$T_{d2}$

SUBSYSTEM

$T_{s1}$
TRANSMIT TIME
ACQUISITION
REQUEST

$T_{s2}$
RECEIVE TIME
INFORMATION

# FIG. 10

| ITEM NO. | OPERATING CONFIGURATION | SUBSYSTEM STATUS | DOMAIN STATUS | SUBSYSTEM REFERENCE CLOCK | DOMAIN REFERENCE CLOCK |
|---|---|---|---|---|---|
| 1-1 | NO NTP SERVER SUBSYSTEM (UPPER) DOMAIN (LOWER) | ACTIVATED | STOPPED | CLOCK DEVICE | — |
| 1-2 | NO NTP SERVER SUBSYSTEM (UPPER) DOMAIN (LOWER) | IN OPERATION | STOPPED | CLOCK DEVICE | — |
| 1-3 | NO NTP SERVER SUBSYSTEM (UPPER) DOMAIN (LOWER) | IN OPERATION | ACTIVATED | CLOCK DEVICE | SYSTEM CLOCK OF SUBSYSTEM + DIFFERENCE TIME |
| 1-4 | NO NTP SERVER SUBSYSTEM (UPPER) DOMAIN (LOWER) | IN OPERATION | IN OPERATION | CLOCK DEVICE | SYSTEM CLOCK OF SUBSYSTEM |
| 2-1 | NTP SERVER (UPPER) SUBSYSTEM (INTERMEDIATE) DOMAIN (LOWER) | ACTIVATED | STOPPED | CLOCK DEVICE | — |
| 2-2 | NTP SERVER (UPPER) SUBSYSTEM (INTERMEDIATE) DOMAIN (LOWER) | IN OPERATION | STOPPED | NTP SERVER | — |
| 2-3 | NTP SERVER (UPPER) SUBSYSTEM (INTERMEDIATE) DOMAIN (LOWER) | IN OPERATION | ACTIVATED | NTP SERVER | SYSTEM CLOCK OF SUBSYSTEM + DIFFERENCE TIME |
| 2-4 | NTP SERVER (UPPER) SUBSYSTEM (INTERMEDIATE) DOMAIN (LOWER) | IN OPERATION | IN OPERATION | NTP SERVER | SYSTEM CLOCK OF SUBSYSTEM |
| 3-1 | NTP SERVER (UPPER) DOMAIN (INTERMEDIATE) SUBSYSTEM (LOWER) | ACTIVATED | STOPPED | CLOCK DEVICE | — |
| 3-2 | NTP SERVER (UPPER) DOMAIN (INTERMEDIATE) SUBSYSTEM (LOWER) | IN OPERATION | STOPPED | CLOCK DEVICE | — |
| 3-3 | NTP SERVER (UPPER) DOMAIN (INTERMEDIATE) SUBSYSTEM (LOWER) | IN OPERATION | ACTIVATED | CLOCK DEVICE | SYSTEM CLOCK OF SUBSYSTEM + DIFFERENCE TIME |
| 3-4 | NTP SERVER (UPPER) DOMAIN (INTERMEDIATE) SUBSYSTEM (LOWER) | IN OPERATION | IN OPERATION | SYSTEM CLOCK OF DOMAIN | NTP SERVER |

FIG. 11

CLOCK
DEVICE — A1

↓ TIME
SYNCHRONIZATION

SUBSYSTEM — 100

↓ TIME
SYNCHRONIZATION

200    300    400

DOMAIN    DOMAIN    DOMAIN

⇓

CLOCK
DEVICE — A1

↓ TIME
SYNCHRONIZATION

SUBSYSTEM — 100

↑ STORE
DIFFERENCE

200    300    400

DOMAIN    DOMAIN    DOMAIN

↑ ↑ ↑ TIME
SYNCHRONIZATION

NTP SERVER — 500

FIG. 12

CLOCK DEVICE  A1

SUBSYSTEM

DIFFERENCE STORING UNIT  150

DIFFERENCE
TIME

SYSTEM CLOCK  110

SUBSYSTEM
ACTIVATION

+ DIFFERENCE
TIME

DOMAIN

SYSTEM CLOCK  210

DOMAIN
ACTIVATION

NTP

TIME SYNCHRONIZATION
WITH NTP SERVER

EP 2 677 434 A1

FIG. 13

NTP SERVER ~501

TIME SYNCHRONIZATION

100

SUBSYSTEM

REGULARLY UPDATE

CLOCK DEVICE ~A1

TIME SYNCHRONIZATION

200

DOMAIN

300

DOMAIN

400

DOMAIN

NTP SERVER ~501

TIME SYNCHRONIZATION

100

SUBSYSTEM

REGULARLY UPDATE

CLOCK DEVICE ~A1

STORE DIFFERENCE

200

DOMAIN

300

DOMAIN

400

DOMAIN

TIME SYNCHRONIZATION

NTP SERVER ~500

FIG. 14

EP 2 677 434 A1

FIG. 15

CLOCK DEVICE A1

↓ TIME SYNCHRONIZATION

SUBSYSTEM 100

DOMAIN   DOMAIN   DOMAIN   STOPPED

NTP SERVER 500

SUBSYSTEM 100   REGULARLY UPDATE   CLOCK DEVICE A1

TIME SYNCHRONIZATION

DOMAIN 200   DOMAIN 300   DOMAIN 400

TIME SYNCHRONIZATION

NTP SERVER 500

EP 2 677 434 A1

FIG. 16

CLOCK DEVICE — A1

SUBSYSTEM

REGULARLY
UPDATE

DIFFERENCE STORING UNIT — 150

DIFFERENCE
TIME

SYSTEM CLOCK — 110

SUBSYSTEM
ACTIVATION

NTP

+ DIFFERENCE
TIME

DOMAIN

SYSTEM CLOCK — 210

DOMAIN
ACTIVATION

TIME SYNCHRONIZATION
WITH NTP SERVER

# FIG. 17

EP 2 677 434 A1

**INTERNATIONAL SEARCH REPORT**

| International application No. |
|---|
| PCT/JP2011/053266 |

A. CLASSIFICATION OF SUBJECT MATTER
*G06F13/00*(2006.01)i, *G06F1/14*(2006.01)i

According to International Patent Classification (IPC) or to both national classification and IPC

B. FIELDS SEARCHED

Minimum documentation searched (classification system followed by classification symbols)
G06F13/00, G06F1/14

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2000-50004 A  (Ricoh Co., Ltd.),<br>18 February 2000 (18.02.2000),<br>paragraphs [0056] to [0062]<br>(Family: none) | 1-11 |
| A | JP 2003-66170 A  (NEC Corp.),<br>05 March 2003 (05.03.2003),<br>paragraphs [0018] to [0034]<br>(Family: none) | 2-9 |
| A | JP 2008-262292 A  (Hitachi, Ltd.),<br>30 October 2008 (30.10.2008),<br>paragraphs [0056] to [0062]<br>(Family: none) | 2-9 |

☒ Further documents are listed in the continuation of Box C.          ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>09 March, 2011 (09.03.11) | Date of mailing of the international search report<br>22 March, 2011 (22.03.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/053266 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2006-221613 A  (Matsushita Electric Industrial Co., Ltd.), 24 August 2006 (24.08.2006), paragraphs [0008], [0031] to [0037] (Family: none) | 4-9 |
| A | JP 2008-102713 A  (Matsushita Electric Works, Ltd.), 01 May 2008 (01.05.2008), paragraphs [0017] to [0026] (Family: none) | 6-9 |

Form PCT/ISA/210 (continuation of second sheet) (July 2009)

**EP 2 677 434 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008262292 A